# EUROPEAN PATENT SPECIFICATION

(11) **EP 4 625 005 B1**
(45) Date of publication and mention of the grant of the patent: **25.11.2026**
(21) Application number: 24752707.0
(22) Date of filing: 26.01.2024
(51) Int. Cl.: G02B 3/00, G02B 3/02, G02B 5/08

(54) **EQUIVALENT NEGATIVE REFRACTIVE INDEX PLATE LENS AND MANUFACTURING METHOD THEREFOR**
ÄQUIVALENTE NEGATIV-BRECHUNGSINDEX-PLATTENLINSE UND HERSTELLUNGSVERFAHREN DAFÜR
LENTILLE À PLAQUE À INDICE DE RÉFRACTION NÉGATIF ÉQUIVALENT ET SON PROCÉDÉ DE FABRICATION

(30) Priority: 10.02.2023 CN 202310138976
(43) Date of publication of application: 01.10.2025
(73) Proprietor: Anhui Easpeed Technology Co., Ltd., Hefei, Anhui 230088 (CN)
(72) Inventor: ZHANG, Liangliang, Hefei, Anhui 230088 (CN); HAN, Chengfei, Hefei, Anhui 230088 (CN); HU, Yuanhang, Hefei, Anhui 230088 (CN); HAN, Dongcheng, Hefei, Anhui 230088 (CN)
(74) Representative: Nederlandsch Octrooibureau
(86) International application number: PCT/CN2024/074140
(87) International publication number: WO 2024/164851

(56) References cited:
- CN-A- 103 579 156
- CN-A- 105 158 846
- CN-A- 106 558 831
- CN-A- 107 771 357
- CN-A- 107 807 417
- CN-A- 110 235 030
- CN-A- 110 687 621
- CN-A- 113 812 002
- CN-A- 116 203 657
- CN-U- 204 966 960
- CN-U- 209 590 318
- US-A1- 2002 090 756
- US-A1- 2016 133 598
- US-A1- 2022 199 871

## Description

### CROSS-REFERENCE TO RELATED APPLICATIONS

### FIELD

The present disclosure relates to the field of optical manufacturing technologies, and more particularly, to an equivalent negative refractive index flat lens and a method for preparing the same.

### BACKGROUND

A flat lens, with a full name of an equivalent negative refractive index flat lens, uses two periodically distributed arrayed optical waveguides to be orthogonal to each other, causing light rays to undergo total internal reflection once in each of the two arrayed optical waveguides. Since the two arrayed optical waveguides are mutually orthogonal rectangular structures, an incident angle at the first total internal reflection and an exit angle at the second total internal reflection may be the same. All the light rays within a divergence angle of a light source can converge into a three-dimensional space with the flat lens as a plane symmetry after passing through the flat lens, thus obtaining a 1: 1 floating real image.

In the related art, a manufacturing process of the equivalent negative refractive index flat lens involves using an adhesive to bond multiple flat layers. High accuracy of spacers are required to be used. In addition, presence of the spacers reduces a bonding force between the optical waveguides, making the optical waveguide arrays prone to fracture. Direct pressing after applying the adhesive easily introduces bubbles, and since the organic adhesive shrinks during curing, localized deformation may occur. Also, the existing manufacturing process for the optical waveguides of equivalent negative refractive index flat lenses involves a resin adhesive to bond multiple flat layers. The resin adhesive has a large curing shrinkage rate. In addition, curing of the resin adhesive is an exothermic process. During curing, there is uneven temperature distribution, which easily causes stress-strain, adversely affecting quality of the equivalent negative refractive index flat lens.

Therefore, the existing preparation method of equivalent negative refractive index flat lens needs to be improved. Prior art can be found in CN 107 807 417 A.

### SUMMARY

The present disclosure aims to solve at least one of the technical problems in the related art to some extent. Therefore, an embodiment of the present disclosure is to provide an equivalent negative refractive index flat lens and a method for preparing the same. This method can avoid stress-strain, improve lens imaging quality, and enhance aging performance.

In an aspect of the present disclosure, the present disclosure provides a method for preparing an equivalent negative refractive index flat lens. According to an embodiment of the present disclosure, the method includes: (1) forming reflective layers on two opposite sides of a transparent substrate layer; (2) forming protective layers on the reflective layers, respectively; (3) forming a first bonding metal layer on one of the protective layers and a second bonding metal layer on the other of the protective layers, to form a flat optical waveguide; (4) stacking at least two flat optical waveguides in a first direction, wherein the first bonding metal layer in one flat optical waveguides of the at least two flat optical waveguides abuts against the second bonding metal layer in an adjacent flat optical waveguide adjacent to the one flat optical waveguide, and heating and applying a pressure to the at least two flat optical waveguides to integrate the first bonding metal layer and the second bonding metal layer that abut against each other, followed by annealing, to obtain a multi-layer flat optical waveguide; (5) taking two multi-layer flat optical waveguides, cutting one of the two multi-layer flat optical waveguides into a plurality of first strip-shaped flat optical waveguides to obtain a first optical waveguide array, and cutting the other of the two multi-layer flat optical waveguides into a plurality of second strip-shaped flat optical waveguides to obtain a second optical waveguide array, wherein an extension direction of the first strip-shaped flat optical waveguides is perpendicular to an extension direction of the second strip-shaped flat optical waveguides; and (6) stacking the first optical waveguide array and the second optical waveguide array in the first direction, enabling the extension direction of the plurality of first strip-shaped flat optical waveguides to be perpendicular to the extension direction of the plurality of second strip-shaped flat optical waveguides after the stacking, and applying protective window panes on two sides to obtain the equivalent negative refractive index flat lens.

With the method for preparing the equivalent negative refractive index flat lens according to the embodiment of the present disclosure, the flat optical waveguide is obtained by forming the first bonding metal layer and the second bonding metal layer at the protective layers on an upper side and a lower side of the reflective layer, respectively. The flat optical waveguides are sequentially stacked such that the first bonding metal layer abuts against the second bonding metal layer in the adjacent flat optical waveguides. Heat and pressure are then applied to cause mutual diffusion of metal atoms between the first bonding metal layer and the second bonding metal layer, thereby forming a unified metal alloy. Therefore, adjacent flat optical waveguides are bonded together through metal-to-metal bonding, forming a metallurgical bonding layer, which eliminates a need for using a resin adhesive as a bonding layer in the related art, and thus avoids stress-strain caused by the bonding layer. Also, using metal as the bonding layer, on one hand, can reduce a thickness of the bonding layer and thus improve imaging quality, and on the other hand, the metal, having high stability, can improve aging performance. Then, annealing is performed to obtain the multi-layer flat optical waveguide. Then, two multi-layer flat optical waveguides are taken. One of the two multi-layer flat optical waveguides is cut into the plurality of first strip-shaped flat optical waveguides to obtain a first strip-shaped optical waveguide array, and the other of the two multi-layer flat optical waveguides is cut into the plurality of second strip-shaped flat optical waveguides to obtain a second strip-shaped optical waveguide array. Then, the two strip-shaped optical waveguide arrays are stacked. An extension direction of the first strip-shaped flat optical waveguides is perpendicular to an extension direction of the second strip-shaped flat optical waveguides after the stacking, thereby achieving aberration-free point-to-point imaging of the object and image sides. Finally, protective window panes are applied on two sides to obtain the equivalent negative refractive index flat lens. Therefore, the method can avoid stress-strain in the bonding layer, enhance aging performance, and also improve the imaging quality of the prepared lens.

In addition, the method for preparing the equivalent negative refractive index flat lens according to the above embodiment of the present disclosure can further have the following additional technical features.

In some embodiments of the present disclosure, in step (1), the transparent substrate layer has a length ranging from 10 mm to 10,000 mm, a width ranging from 10 mm to 10,000 mm, and a thickness ranging from 0.2 mm to 4 mm.

In some embodiments of the present disclosure, a material of the transparent substrate layer includes at least one of transparent glass and quartz. In some embodiments of the present disclosure, the reflective layer has a thickness ranging from 50 nm to 10 µm.

In some embodiments of the present disclosure, a material of the reflective layer includes at least one of a metallic reflective film and a dielectric reflective film.

In some embodiments of the present disclosure, the metallic reflective film includes at least one of aluminum, silver, gold, and copper, and the dielectric reflective film is a non-metallic oxide film.

In some embodiments of the present disclosure, in step (2), the protective layer has a thickness ranging from 10 nm to 1 µm.

In some embodiments of the present disclosure, a material of the protective layer includes at least one of silicon monoxide, magnesium fluoride, silicon dioxide, and aluminum trioxide.

In some embodiments of the present disclosure, in step (3), a material of the first bonding metal layer along a thickness direction of the first bonding metal layer is Ni/Au/In, Ni/Au, Cr/Au, Ni/Au/In, Ti/Au, Cr/Au/Ni/AuGe, Pd, Ti, Pt, Cr/Al/Cr/In, Ti/Cu, AuBe, or Cr/Sn; and a material of the second bonding metal layer along a thickness direction of the second bonding metal layer is In/Au/Ni, In/Ni, In/Cr, In/Au/Pt/Ti, Au/Ti, GeAu/Ni/Au/Cr, Pd, Ti, Pt, In/Cr/Al/Cr, Cu/Ti, BeAu, or Sn/Cr, corresponding to the material of the first bonding metal layer in a one-to-one correspondence.

In some embodiments of the present disclosure, in step (3), a material of the first bonding metal layer along a thickness direction of the first bonding metal layer is In/Au/Ni, In/Ni, In/Cr, In/Au/Pt/Ti, Au/Ti, GeAu/Ni/Au/Cr, Pd, Ti, Pt, In/Cr/Al/Cr, Cu/Ti, BeAu, or Sn/Cr; and a material of the second bonding metal layer along the thickness direction of the second bonding metal layer is Ni/Au/In, Ni/Au, Cr/Au, Ni/Au/In, Ti/Au, Cr/Au/Ni/AuGe, Pd, Ti, Pt, Cr/Al/Cr/In, Ti/Cu, AuBe, or Cr/Sn, corresponding to the material of the material of the first bonding metal layer in a one-to-one correspondence.

In some embodiments of the present disclosure, in step (3), a thickness ratio of metal Ni, metal Au, and metal In in the Ni/Au/In is (10 to 100):(10 to 100):(10 to 50).

In some embodiments of the present disclosure, a thickness ratio of metal Ni to metal Au in the Ni/Au is (10 to 100):(50 to 1,000).

In some embodiments of the present disclosure, a thickness ratio of metal Cr to metal Au in the Cr/Au is (10 to 100):(50 to 1,000).

In some embodiments of the present disclosure, the thickness ratio of metal Ni, metal Au, and metal In in the Ni/Au/In is (10 to 100):(10 to 100):(10 to 100).

In some embodiments of the present disclosure, a thickness ratio of metal Ti to metal Au in the Ti/Au is (10 to 100):(100 to 3,000).

In some embodiments of the present disclosure, a thickness ratio of metal Cr, metal Au, metal Ni, and metal AuGe in the Cr/Au/Ni/AuGe is (10 to 100):(10 to 100):(10 to 100):(100 to 3,000).

In some embodiments of the present disclosure, a thickness of the Pd ranges from 50 nm to 3,000 nm.

In some embodiments of the present disclosure, a thickness of the Ti ranges from 50 nm to 3,000 nm.

In some embodiments of the present disclosure, a thickness of the Pt ranges from 50 nm to 3,000 nm.

In some embodiments of the present disclosure, a thickness ratio of metal Cr, metal Al, metal Cr, and metal In in the Cr/Al/Cr/In is (10 to 100):(10 to 100):(10 to 100):(10 to 100).

In some embodiments of the present disclosure, a thickness ratio of metal Ti to metal Cu in the Ti/Cu is (10 to 100):(100 to 3,000).

In some embodiments of the present disclosure, a thickness of the AuBe ranges from 50 nm to 3,000 nm.

In some embodiments of the present disclosure, a thickness ratio of metal Cr to metal Sn in the Cr/Sn is (10 to 100):(100 to 3,000).

In some embodiments of the present disclosure, in step (3), a thickness ratio of metal In, metal Au, and metal Ni in the In/Au/Ni is (10 to 50):(10 to 100):(10 to 100).

In some embodiments of the present disclosure, a thickness ratio of metal In to metal Ni in the In/Ni is (10 to 100):(10 to 100).

In some embodiments of the present disclosure, a thickness ratio of metal In to metal Cr in the In/Cr is (10 to 100):(10 to 100).

In some embodiments of the present disclosure, a thickness ratio of metal In, metal Au, metal Pt, and metal Ti in the In/Au/Pt/Ti is (10 to 100):(10 to 100):(10 to 100):(100 to 100).

In some embodiments of the present disclosure, a thickness ratio of metal Au to metal Ti in the Au/Ti is (100 to 3,000):(10 to 100).

In some embodiments of the present disclosure, a thickness ratio of metal GeAu, metal Ni, metal Au, and metal Cr in the GeAu/Ni/Au/Cr is (100 to 3,000):(10 to 100):(10 to 100):(10 to 100).

In some embodiments of the present disclosure, a thickness of the Pd ranges from 50 nm to 3,000 nm. A thickness of the Ti ranges from 50 nm to 3,000 nm.

In some embodiments of the present disclosure, a thickness of the Pt ranges from 50 nm to 3,000 nm.

In some embodiments of the present disclosure, a thickness ratio of metal In, metal Cr, metal Al, and metal Cr in the In/Cr/Al/Cr is (10 to 100):(10 to 100):(10 to 100):(10 to 100).

In some embodiments of the present disclosure, a thickness ratio of metal Cu to metal Ti in the Cu/Ti is (100 to 3,000):(10 to 100).

In some embodiments of the present disclosure, a thickness of metal BeAu in the BeAu ranges from 50 nm to 3,000 nm.

In some embodiments of the present disclosure, a thickness ratio of metal Sn to metal Cr in the Sn/Cr is (100 to 3,000):(10 to 100).

In some embodiments of the present disclosure, the pressure applied ranges from 1 Kgf to 50 Kgf.

In some embodiments of the present disclosure, a heating temperature of the Ni/Au/In and the In/Au/Ni ranges from 150°C to 200°C, and a heating duration of the Ni/Au/In and the In/Au/Ni ranges from 1 h to 20 h.

In some embodiments of the present disclosure, a heating temperature of the Ni/Au and the In/Ni ranges from 130°C to 200°C, and a heating duration of the Ni/Au and the In/Ni ranges from 0.2 h to 5 h.

In some embodiments of the present disclosure, a heating temperature of the Cr/Au and the In/Cr ranges from 130°C to 200°C, and a heating duration of the Cr/Au and the In/Cr ranges from 0.2 h to 5 h.

In some embodiments of the present disclosure, a heating temperature of the Ni/Au/In and the In/Au/Pt/Ti ranges from 150°C to 200°C, and a heating duration of the Ni/Au/In and the In/Au/Pt/Ti ranges from 1 h to 20 h.

In some embodiments of the present disclosure, a heating temperature of the Ti/Au and the Au/Ti ranges from 250°C to 350°C, and a heating duration of the Ti/Au and the Au/Ti ranges from 1 h to 12 h.

In some embodiments of the present disclosure, a heating temperature of the Cr/Au/Ni/AuGe and the GeAu/Ni/Au/Cr ranges from 150°C to 220°C, and a heating duration of the Cr/Au/Ni/AuGe and the GeAu/Ni/Au/Cr ranges from 1 h to 20 h.

In some embodiments of the present disclosure, a heating temperature of the Pd ranges from 100°C to 160°C, and a heating duration of the Pd ranges from 1 h to 20 h.

In some embodiments of the present disclosure, a heating temperature of the Ti ranges from 200°C to 400°C, and a heating duration of the Ti ranges from 1 h to 20 h.

In some embodiments of the present disclosure, a heating temperature of the Pt ranges from 200°C to 400°C, and a heating duration of the Pt ranges from 1 h to 20 h.

In some embodiments of the present disclosure, a heating temperature of the Cr/Al/Cr/In and the In/Cr/Al/Cr ranges from 150°C to 200°C, and a heating duration of the Cr/Al/Cr/In and the In/Cr/Al/Cr ranges from 1 h to 20 h.

In some embodiments of the present disclosure, a heating temperature of the Ti/Cu and the Cu/Ti ranges from 350°C to 500°C, and a heating duration of the Ti/Cu and the Cu/Ti ranges from 1 h to 20 h.

In some embodiments of the present disclosure, a heating temperature of the AuBe ranges from 150°C to 250°C, and a heating duration of the AuBe ranges from 1 h to 20 h.

In some embodiments of the present disclosure, a heating temperature of the Cr/Sn and the Sn/Cr ranges from 90°C to 120°C, and a heating duration of the Cr/Sn and the Sn/Cr ranges from 1 h to 20 h.

In some embodiments of the present disclosure, an annealing temperature of the Ni/Au/In and the In/Au/Ni ranges from 230°C to 300°C, and an annealing duration of the Ni/Au/In and the In/Au/Ni ranges from 0.2 to 5 h.

In some embodiments of the present disclosure, an annealing temperature of the Ni/Au and the In/Ni ranges from 300°C to 450°C, and an annealing duration of the Ni/Au and the In/Ni ranges from 0.2 h to 5 h.

In some embodiments of the present disclosure, an annealing temperature of the Cr/Au and the In/Cr ranges from 300°C to 450°C, and an annealing duration of the Cr/Au and the In/Cr ranges from 0.2 h to 5 h.

In some embodiments of the present disclosure, an annealing temperature of the Ni/Au/In and the In/Au/Pt/Ti ranges from 230°C to 300°C, and an annealing duration of the Ni/Au/In and the In/Au/Pt/Ti ranges from 0.2 to 5 h.

In some embodiments of the present disclosure, an annealing temperature of the Ti/Au and the Au/Ti ranges from 400°C to 500°C, and an annealing duration of the Ti/Au and the Au/Ti ranges from 0.2 h to 10 h.

In some embodiments of the present disclosure, an annealing temperature of the Cr/Au/Ni/AuGe and the GeAu/Ni/Au/Cr ranges from 300°C to 450°C, and an annealing duration of the Cr/Au/Ni/AuGe and the GeAu/Ni/Au/Cr ranges from 0.5 to 10 h.

In some embodiments of the present disclosure, an annealing temperature of the Pd ranges from 200°C to 300°C, and an annealing duration of the Pd ranges from 0.1 h to 5 h.

In some embodiments of the present disclosure, an annealing temperature of the Cr/Al/Cr/In and the In/Cr/Al/Cr ranges from 250°C to 350°C, and an annealing duration of the Cr/Al/Cr/In and the In/Cr/Al/Cr ranges from 0.1 h to 5 h.

In some embodiments of the present disclosure, an annealing temperature of the Ti/Cu and the Cu/Ti is 550°C, and an annealing duration of the Ti/Cu and the Cu/Ti ranges from 0.3 to 5 h.

In some embodiments of the present disclosure, an annealing temperature of the AuBe and the BeAu ranges from 280°C to 350°C, and an annealing duration of the AuBe and the BeAu ranges from 0.1 h to 2 h.

In some embodiments of the present disclosure, an annealing temperature of the Cr/Sn and the Sn/Cr ranges from 140°C to 200°C, and an annealing duration of the Cr/Sn and the Sn/Cr ranges from 0.5 h to 5 h.

In some embodiments of the present disclosure, the method further includes, in step (4), subsequent to the stacking at least two flat optical waveguides in the first direction: disposing a first bonding wafer on the stacked flat optical waveguides, and a second bonding wafer on a side of the stacked flat optical waveguides facing away from the first bonding wafer.

In some embodiments of the present disclosure, the first bonding wafer includes: the transparent substrate layer; the reflective layers formed at two opposite sides of the transparent substrate layer; the protective layers formed on the reflective layers, respectively; and the second bonding metal layer formed on a bottom surface of the protective layer and abutting against the first bonding metal layer of the flat optical waveguide.

In some embodiments of the present disclosure, the second bonding wafer includes: the transparent substrate layer; the reflective layers formed at two opposite sides of the transparent substrate layer; the protective layers formed on the reflective layers, respectively; and the first bonding metal layer formed on the protective layer and abutting against the second bonding metal layer of the flat optical waveguide.

In a second aspect of the present disclosure, the present disclosure provides an equivalent negative refractive index flat lens. According to the embodiments of the present disclosure, the equivalent negative refractive index flat lens is prepared by the above method. Therefore, the imaging quality of the lens is improved.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic flowchart illustrating a method for preparing an equivalent negative refractive index flat lens according to an embodiment of the present disclosure.
FIG. 2 is a schematic flowchart illustrating a method for preparing an equivalent negative refractive index flat lens according to another embodiment of the present disclosure.
FIG. 3 is a schematic diagram of a transparent substrate layer according to an embodiment of the present disclosure.
FIG. 4 is a schematic diagram of a flat optical waveguide according to an embodiment of the present disclosure.
FIG. 5 is a schematic diagram of a multi-layer flat optical waveguide after bonding according to an embodiment of the present disclosure.
FIG. 6 is a schematic diagram of a bonding process according to an embodiment of the present disclosure.
FIG. 7 is a schematic diagram of multi-layer flat optical waveguides before bonding according to another embodiment of the present disclosure.
FIG. 8 is a schematic diagram of multi-layer flat optical waveguides after bonding according to another embodiment of the present disclosure.
FIG. 9 is a schematic diagram illustrating an equivalent negative refractive index flat lens according to an embodiment of the present disclosure.
FIG. 10 is a schematic front structural view in a thickness direction of FIG. 9 according to the present disclosure.
FIG. 11 is an exploded view of an equivalent negative refractive index flat lens according to an embodiment of the present disclosure.
FIG. 12 is a schematic diagram illustrating imaging of a first optical waveguide array and a second optical waveguide array according to the present disclosure.
FIG. 13 is an exploded schematic diagram illustrating imaging of the first optical waveguide array of FIG. 12 according to the present disclosure, in which (1) is a schematic diagram illustrating a principle of reflection and focusing imaging of light rays within the first optical waveguide array, and (2) is a schematic diagram illustrating a convergence principle of imaging light rays of the first optical waveguide array.
FIG. 14 is a schematic optical path diagram of an imaging principle of an equivalent negative refractive index flat lens according to an embodiment of the present disclosure.

Reference numerals of the accompanying drawings:
1 equivalent negative refractive index flat lens;
101 first protective window pane;
102 first optical waveguide array; 1021 first strip-shaped flat optical waveguide;
103 second optical waveguide array; 1031 second strip-shaped flat optical waveguide;
104 second protective window pane;
10 transparent substrate layer;
20 reflective layer;
30 protective layer;
40 first bonding metal layer;
50 second bonding metal layer; 501 bonding layer;
110 first bonding wafer;
120 second bonding wafer;
11 pressure plate;
12 heating plate.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative, and are intended to explain, rather than limiting, the embodiments of the present disclosure.

In the description of the present disclosure, it should be understood that, the orientation or the position indicated by terms such as "center," "longitudinal," "lateral," "length," "width," "thickness," "over," "below," "front," "rear," "left," "right," "vertical," "horizontal," "top," "bottom," "inner," "outer," "clockwise," "anti-clockwise," "axial," "radial," and "circumferential" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, the terms such as "first" "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as two, three, unless otherwise specifically defined.

In the present disclosure, unless otherwise clearly specified and limited, terms, such as "mounting," "connect," "connect to," "fixed to," or the like, should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, specific meanings of the above-mentioned terms in the present disclosure can be understood according to specific circumstances.

In the present disclosure, unless otherwise clearly specified and limited, the first feature "on" or "under" the second feature may mean that the first feature is in direct contact with the second feature, or the first and second features are in indirect contact through an intermediate. In addition, the first feature "above" the second feature means that the first feature is directly above or obliquely above the second feature, or simply means that the level of the first feature is higher than that of the second feature. The first feature "below" the second feature may mean that the first feature is directly below or obliquely below the second feature, or simply mean that the level of the first feature is smaller than that of the second feature.

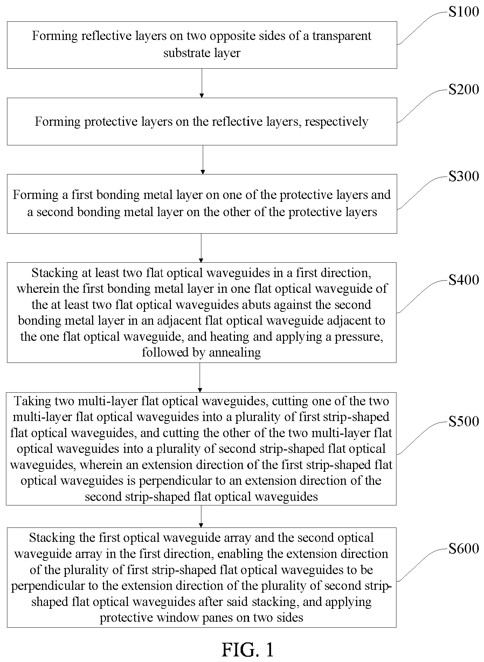

In a first aspect of the present disclosure, the present disclosure provides a method for preparing an equivalent negative refractive index flat lens 1. According to an embodiment of the present disclosure, as illustrated in FIG. 1, the method includes operations at blocks.

At S100, reflective layers are formed on two opposite sides of a transparent substrate layer.

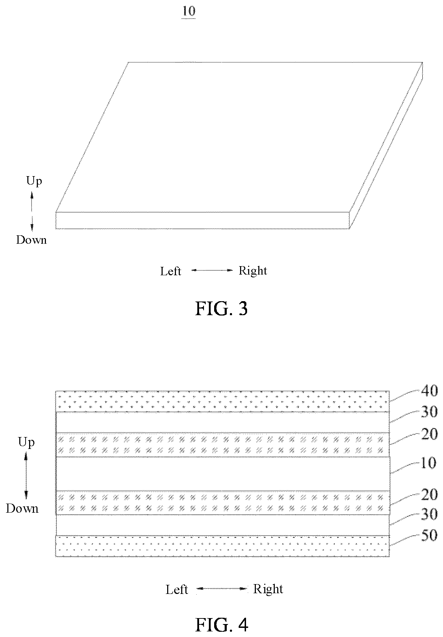

In this step, reflective layers 20 are formed on two opposite sides of a transparent substrate layer 10. The transparent substrate layer 10 is illustrated in FIG. 3. In an exemplary embodiment of the present disclosure, the transparent substrate layer 10 is provided. The transparent substrate layer 10 can be cleaned with a cleaning agent to remove dust and adhered organic matter on the surface thereof. The cleaning agent can be an organic solvent such as deionized water, anhydrous ethanol, acetone, or ether, and can also be dried through hot air drying or an air knife. Then, the reflective layer 20 is deposited on an upper surface and a lower surface of the dried transparent substrate layer 10. It should be noted that a method of depositing the reflective layer 20 is not particularly limited, which may be, for example, vacuum thermal evaporation, ion beam evaporation, magnetron sputtering, vacuum reactive evaporation, pulsed laser deposition, or the like. The magnetron sputtering is preferred. Further, the transparent substrate layer 10 has a length ranging from 10 mm to 10,000 mm, a width ranging from 10 mm to 10,000 mm, and a thickness ranging from 0.2 mm to 4 mm. A material of the transparent substrate layer 10 includes at least one of transparent glass and quartz. The reflective layer 20 has a thickness ranging from 50 nm to 10 µm, preferably ranging from 80 nm to 500 nm. A material of the reflective layer 20 includes at least one of a metallic reflective film and a dielectric reflective film. The metallic reflective film includes at least one of aluminum, silver, gold, and copper. The dielectric reflective film is a non-metallic oxide film, preferably a multi-layer dielectric film. A reflectivity spectrum of the dielectric reflective film can be broadband or narrowband. A wavelength of the reflective layer 20 can be the entire range or a certain range of ultraviolet-visible-infrared, and can be used for imaging the entire range or a certain range of ultraviolet-visible-infrared. It should be noted that the length of the transparent substrate layer 10 may be any value within 10 mm to 10,000 mm, for example, 10 mm, 20 mm, 100 mm, 10,000 mm, or the like. The width of the transparent substrate layer 10 may be any value within 10 mm to 10,000 mm, for example, 10 mm, 20 mm, 100 mm, 10,000 mm, or the like. The thickness of the transparent substrate layer 10 may be any value within 0.2 mm to 4 mm, for example, 0.2 mm, 1 mm, 3 mm, 4 mm, or the like. The thickness of the reflective layer 20 may be any value within 50 nm to 10 µm, for example, 50 nm, 1 µm, 10 µm, or the like.

At S200, protective layers are formed on the reflective layers, respectively.

In this step, protective layers 30 are formed on the reflective layers 20, respectively. In an exemplary embodiment of the present disclosure, reflective layers 20 are formed on both an upper side and a lower side of the transparent substrate layer 10, and protective layers 30 are deposited on the two reflective layers 20, respectively. It should be noted that a method of depositing the protective layer 30 is the same as the method of depositing the reflective layer 20 above, and thus details thereof are omitted here. Further, the protective layer 30 has a thickness ranging from 10 nm to 1 µm, preferably ranging from 50 nm to 200 nm. It should be noted that a material of the protective layer 30 includes at least one of silicon monoxide, magnesium fluoride, silicon dioxide, and aluminum trioxide. The thickness of the protective layer 30 may be any value within 10 nm to 1 µm, for example, 10 nm, 20 nm, 1 µm, or the like.

At S300, a first bonding metal layer is formed on one of the protective layers and a second bonding metal layer is formed on the other of the protective layers.

In this step, a first bonding metal layer 40 is formed on one of the protective layers 30 and a second bonding metal layer 50 is formed on the other of the protective layers 30, to obtain a flat optical waveguide. A schematic diagram of the flat optical waveguide is shown in FIG. 4. In an exemplary embodiment of the present disclosure, two protective layers 30 are formed on the reflective layers 20, respectively. The first bonding metal layer 40 is deposited on one of the protective layers 30, and the second bonding metal layer 50 is deposited on the other of the protective layers 30.

Further, when a material of the first bonding metal layer 40 along a thickness direction of the first bonding metal layer 40 is Ni/Au/In, Ni/Au, Cr/Au, Ni/Au/In, Ti/Au, Cr/Au/Ni/AuGe, Pd, Ti, Pt, Cr/Al/Cr/In, Ti/Cu, AuBe, or Cr/Sn, a material of the second bonding metal layer 50 along a thickness direction of the second bonding metal layer 50 is In/Au/Ni, In/Ni, In/Cr, In/Au/Pt/Ti, Au/Ti, GeAu/Ni/Au/Cr, Pd, Ti, Pt, In/Cr/Al/Cr, Cu/Ti, BeAu, or Sn/Cr, corresponding to the material of the first bonding metal layer 40 in a one-to-one correspondence. It should be understood that when the material of the first bonding metal layer 40 is the Ni/Au/In, the material of the second bonding metal layer 50 correspondingly is the In/Au/Ni. Also, metal Ni is attached to the protective layer 30 to bond Au and the protective layer 30. In is at an outermost layer for subsequent bonding, and metal Au is at a middle layer to bond and perform auxiliary bonding. AuIn alloy is formed after bonding. It should be noted that the Ni/Au/In should be understood as a total of three layers of metal Ni, metal Au, and metal In superimposed from top to bottom, the In/Au/Ni should be understood as a total of three layers of metal In, metal Au, and metal Ni superimposed from top to bottom, and understanding of remaining bonding metal layers is the same as that described above, and will not be repeated here. Also, the first bonding metal layer 40 and the second bonding metal layer 50 adopt a combination of various metals, to ensure bonding strength between the metal and the protective layer 30 and bonding strength of an alloy after bonding, and simplify a bonding process.

Further, when a material of the first bonding metal layer 40 along a thickness direction of the first bonding metal layer 40 is In/Au/Ni, In/Ni, In/Cr, In/Au/Pt/Ti, Au/Ti, GeAu/Ni/Au/Cr, Pd, Ti, Pt, In/Cr/Al/Cr, Cu/Ti, BeAu, or Sn/Cr, a material of the second bonding metal layer 50 along a thickness direction of the second bonding metal layer 50 is Ni/Au/In, Ni/Au, Cr/Au, Ni/Au/In, Ti/Au, Cr/Au/Ni/AuGe, Pd, Ti, Pt, Cr/Al/Cr/In, Ti/Cu, AuBe, or Cr/Sn, corresponding to the material of the first bonding metal layer 40 in a one-to-one correspondence. It should be noted that understanding of the above configuration is the same as that described above, and thus details thereof will be omitted here.

Further, a thickness ratio of metal Ni, metal Au, and metal In in the Ni/Au/In is (10 to 100):(10 to 100):(10 to 50). A thickness ratio of metal Ni to metal Au in the Ni/Au is (10 to 100):(50 to 1,000). A thickness ratio of metal Cr to metal Au in the Cr/Au is (10 to 100):(50 to 1,000). The thickness ratio of metal Ni, metal Au, and metal In in the Ni/Au/In is (10 to 100):(10 to 100):(10 to 100). A thickness ratio of metal Ti to metal Au in the Ti/Au is (10 to 100):(10 to 3,000). A thickness ratio of metal Cr, metal Au, metal Ni, and metal AuGe in the Cr/Au/Ni/AuGe is (10 to 100):(10 to 100):(10 to 100):(100 to 3,000). A thickness of the Pd ranges from 50 nm to 3,000 nm. A thickness of the Ti ranges from 50 nm to 3,000 nm. A thickness of the Pt ranges from 50 nm to 3,000 nm. A thickness ratio of metal Cr, metal Al, metal Cr, and metal In in the Cr/Al/Cr/In is (10 to 100):(10 to 100):(10 to 100):(10 to 100). A thickness ratio of metal Ti to metal Cu in the Ti/Cu is (10 to 100):(100 to 3,000). A thickness of the AuBe ranges from 50 nm to 3,000 nm. A thickness ratio of metal Cr to metal Sn in the Cr/Sn is (10 to 100):(100 to 3,000). Therefore, bonding of the first bonding metal layer 40 and the second bonding metal layer 50 is facilitated.

Further, a thickness ratio of metal In, metal Au, and metal Ni in the In/Au/Ni is (10 to 50):(10 to 100):(10 to 100). A thickness ratio of metal In to metal Ni in the In/Ni is (10 to 100):(10 to 100). A thickness ratio of metal In to metal Cr in the In/Cr is (10 to 100):(10 to 100). A thickness ratio of metal In, metal Au, metal Pt, and metal Ti in the In/Au/Pt/Ti is (10 to 100):(10 to 100):(10 to 100):(10 to 100). A thickness ratio of metal Au to metal Ti in the Au/Ti is (100 to 3,000):(10 to 100). Therefore, bonding of the first bonding metal layer 40 and the second bonding metal layer 50 is facilitated.

Further, a thickness ratio of metal GeAu, metal Ni, metal Au, and metal Cr in the GeAu/Ni/Au/Cr is (100 to 3,000):(10 to 100):(10 to 100):(10 to 100). A thickness of the Pd ranges from 50 nm to 3,000 nm. A thickness of the Ti ranges from 50 nm to 3,000 nm. A thickness of the Pt ranges from 50 nm to 3,000 nm. A thickness ratio of metal In, metal Cr, metal Al, and metal Cr in the In/Cr/Al/Cr is (10 to 100):(10 to 100):(10 to 100):(10 to 100). A thickness ratio of metal Cu to metal Ti in the Cu/Ti is (100 to 3,000):(10 to 100). A thickness of metal BeAu in the BeAu ranges from 50 nm to 3,000 nm. A thickness ratio of metal Sn to metal Cr in the Sn/Cr is (100 to 3,000):(10 to 100). Therefore, bonding of the first bonding metal layer 40 and the second bonding metal layer 50 is facilitated.

At S400, at least two flat optical waveguides are stacked in a first direction. The first bonding metal layer in one flat optical waveguide of the at least two flat optical waveguides abuts against the second bonding metal layer in an adjacent flat optical waveguide adjacent to the one flat optical waveguide. In addition, heating and applying a pressure are performed on the at least two flat optical waveguides to integrate the first bonding metal layer and the second bonding metal layer that abut against each other, followed by annealing.

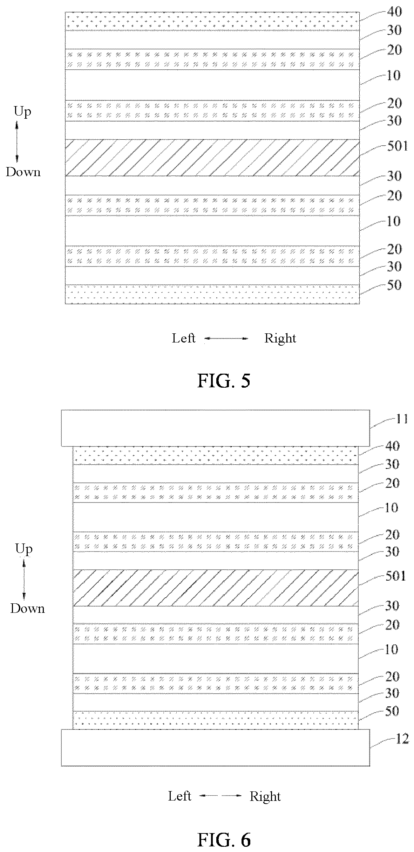

In this step, at least two flat optical waveguides are stacked in a thickness direction. The first bonding metal layer 40 in one flat optical waveguide of the at least two flat optical waveguides abuts against the second bonding metal layer 50 in an adjacent flat optical waveguide adjacent to the one flat optical waveguide. In addition, heating and applying the pressure are performed on the at least two flat optical waveguides to integrate the first bonding metal layer 40 and the second bonding metal layer 50 that abut against each other, forming an integrated bonding layer 501, followed by annealing, to obtain a multi-layer flat optical waveguide. A schematic diagram of the multi-layer flat optical waveguide is shown in FIG. 5. It should be noted that the "first direction" refers to an up-down direction in FIG. 5, that is, the thickness direction of the flat optical waveguide. In an exemplary embodiment of the present disclosure, taking two flat optical waveguides as an example, after stacking, the stacked two flat optical waveguides are placed in a vacuum with a vacuum degree of greater than or equal to -90 kPa. Then, a pressure plate 11 is applied to an uppermost layer, and a heating plate 12 is applied to a lowermost layer, in such a manner that the first bonding metal layer 40 on one flat optical waveguide and the second bonding metal layer 50 on the other flat optical waveguide are combined into a whole. Reference can be made to FIG. 6 for details. Taking three flat optical waveguides as an example, a first bonding metal layer 40 of a flat optical waveguide in an intermediate position and a second bonding metal layer 50 of a second flat optical waveguide are bonded, while a second bonding metal layer 50 of the flat optical waveguide in the intermediate position and a first bonding metal layer 40 of a third flat optical waveguide are bonded. In particular, when the first bonding metal layer 40 on the flat optical waveguide is the Ni/Au/In and the second bonding metal layer 50 on the other flat optical waveguide is the In/Au/Ni, and the first bonding metal layer 40 abuts against the second bonding metal layer 50, metal In layer of the first bonding metal layer 40 and metal In layer of the second bonding metal layer 50 are brought into contact with each other. Then, heating and applying the pressure are performed to make metal Au and metal In of the first bonding metal layer 40 and metal Au and metal In of the second bonding metal layer 50 integrated into a whole, i.e., AuIn alloy, so that the metal atoms in the connecting layer between any adjacent plat optical waveguides diffuse with each other to form an integrated metal. In this way, issues associated with internal stress-strain caused by resin-based adhesives used in conventional bonding processes during curing can be avoided. Moreover, a thickness of the bonding layer is reduced, thereby improving the imaging quality. Also, due to high stability of metal, using metal as the bonding layer can enhance the aging performance. Then, at least two flat optical waveguides formed as a whole are annealed, which can eliminate the internal stress of an alloy or a metal formed after bonding of the first bonding metal layer 40 and the second bonding metal layer 50. In this way, the material can be prevented from bending or cracking after being cut out, improving bonding strength. The annealing cooling process adopts a slow cooling method, with a cooling rate not exceeding 0.5 °C/min.

It should be noted that a number of layers to be stacked is 2 to 10,000, which can be selected as desired by those skilled in the art. A bonding process of the first bonding metal layer 40 and the second bonding metal layer 50 is preferably performed in a high vacuum environment with a relative vacuum degree of not smaller than -90 kPa to prevent oxidation of a metal surface. Also, the bonding process is preferably performed in a dust-free environment, more preferably with a cleanliness level higher than Class 100, to prevent dust particles from affecting the bonding quality.

Further, the pressure applied ranges from 1 Kgf to 50 Kgf. Further, a heating temperature of the Ni/Au/In and the In/Au/Ni ranges from 150°C to 200°C, and a heating duration of the Ni/Au/In and the In/Au/Ni ranges from 1 h to 20 h. A heating temperature of the Ni/Au and the In/Ni ranges from 130°C to 200°C, and a heating duration of the Ni/Au and the In/Ni ranges from 0.2 h to 5 h. A heating temperature of the Cr/Au and the In/Cr ranges from 130°C to 200°C, and a heating duration of the Cr/Au and the In/Cr ranges from 0.2 h to 5 h. A heating temperature of the Ni/Au/In and the In/Au/Pt/Ti ranges from 150°C to 200°C, and a heating duration of the Ni/Au/In and the In/Au/Pt/Ti ranges from 1 h to 20 h. A heating temperature of the Ti/Au and the Au/Ti ranges from 250°C to 350°C, and a heating duration of the Ti/Au and the Au/Ti ranges from 1 h to 12 h. A heating temperature of the Cr/Au/Ni/AuGe and the GeAu/Ni/Au/Cr ranges from 150°C to 220°C, and a heating duration of the Cr/Au/Ni/AuGe and the GeAu/Ni/Au/Cr ranges from 1 h to 20 h. A heating temperature of the Pd ranges from 100°C to 160°C, and a heating duration of the Pd ranges from 1 h to 20 h. A heating temperature of the Ti ranges from 200°C to 400°C, and a heating duration of the Ti ranges from 1 h to 20 h. A heating temperature of the Pt ranges from 200°C to 400°C, and a heating duration of the Pt ranges from 1 h to 20 h. A heating temperature of the Cr/Al/Cr/In and the In/Cr/Al/Cr ranges from 150°C to 200°C, and a heating duration of the Cr/Al/Cr/In and the In/Cr/Al/Cr ranges from 1 h to 20 h. A heating temperature of the Ti/Cu and the Cu/Ti ranges from 350°C to 500°C, and a heating duration of the Ti/Cu and the Cu/Ti ranges from 1 h to 20 h. A heating temperature of the AuBe ranges from 150°C to 250°C, and a heating duration of the AuBe ranges from 1 h to 20 h. A heating temperature of the Cr/Sn and the Sn/Cr ranges from 90°C to 120°C, and a heating duration of the Cr/Sn and the Sn/Cr ranges from 1 h to 20 h. Therefore, the first bonding metal layer 40 and the second bonding metal layer 50 can be better bonded.

Further, an annealing temperature of the Ni/Au/In and the In/Au/Ni ranges from 230°C to 300°C, and an annealing duration of the Ni/Au/In and the In/Au/Ni ranges from 0.2 h to 5 h. An annealing temperature of the Ni/Au and the In/Ni ranges from 300°C to 450°C, and an annealing duration of the Ni/Au and the In/Ni ranges from 0.2 h to 5 h. An annealing temperature of the Cr/Au and the In/Cr ranges from 300°C to 450°C, and an annealing duration of the Cr/Au and the In/Cr ranges from 0.2 h to 5 h. An annealing temperature of the Ni/Au/In and the In/Au/Pt/Ti ranges from 230°C to 300°C, and an annealing duration of the Ni/Au/In and the In/Au/Pt/Ti ranges from 0.2 h to 5 h. An annealing temperature of the Ti/Au and the Au/Ti ranges from 400°C to 500°C, and an annealing duration of the Ti/Au and the Au/Ti ranges from 0.2 h to 10 h. An annealing temperature of the Cr/Au/Ni/AuGe and the GeAu/Ni/Au/Cr ranges from 300°C to 450°C, and an annealing duration of the Cr/Au/Ni/AuGe and the GeAu/Ni/Au/Cr ranges from 0.5 to 10 h. An annealing temperature of the Pd ranges from 200°C to 300°C, and an annealing duration of the Pd ranges from 0.1 h to 5 h. An annealing temperature of the Cr/Al/Cr/In and the In/Cr/Al/Cr ranges from 250°C to 350°C, and an annealing duration of the Cr/Al/Cr/In and the In/Cr/Al/Cr ranges from 0.1 h to 5 h. An annealing temperature of the Ti/Cu and the Cu/Ti is 550°C, and an annealing duration of the Ti/Cu and the Cu/Ti ranges from 0.3 h to 5 h. An annealing temperature of the AuBe and the BeAu ranges from 280°C to 350°C, and an annealing duration of the AuBe and the BeAu ranges from 0.1 h to 2 h. An annealing temperature of the Cr/Sn and the Sn/Cr ranges from 140°C to 200°C, and an annealing duration of the Cr/Sn and the Sn/Cr ranges from 0.5 h to 5 h. Therefore, the stress-strain inside the material can be eliminated, and the material can be prevented from bending or cracking after being cut out.

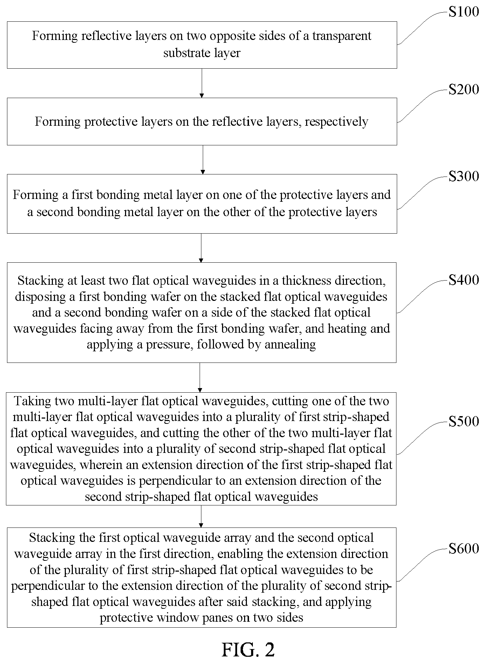

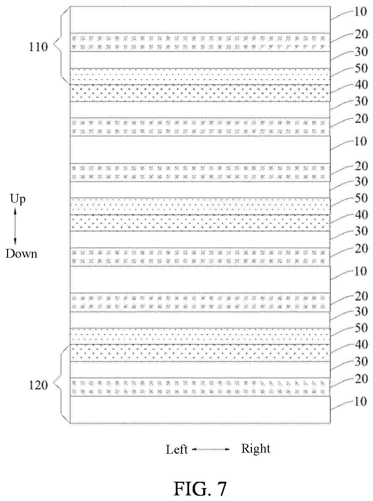

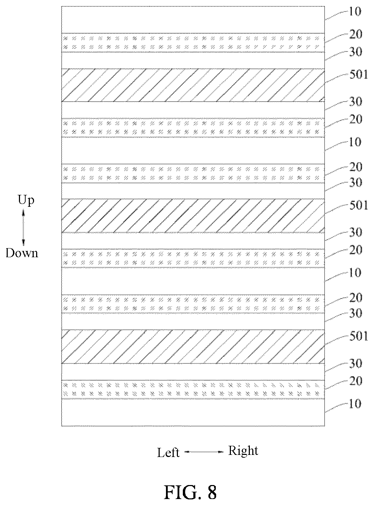

Further, as illustrated in FIG. 2, after stacking at least two flat optical waveguides in the first direction, a first bonding wafer 110 is disposed on the stacked flat optical waveguides and a second bonding wafer 120 is disposed on a side of the stacked flat optical waveguides facing away from the first bonding wafer 110. A schematic diagram before bonding is shown in FIG. 7. A schematic diagram after bonding is shown in FIG. 8. The first bonding wafer 110 includes: the transparent substrate layer 10; the reflective layers 20 formed at two opposite sides of the transparent substrate layer 10; the protective layers 30 formed on the reflective layers 20, respectively; and the second bonding metal layer 50 formed on a bottom surface of the protective layer 30 and abutting against the first bonding metal layer 40 of the flat optical waveguide. The second bonding wafer 120 includes: the transparent substrate layer 10; the reflective layers 20 formed at two opposite sides of the transparent substrate layer 10; the protective layers 30 formed on the reflective layers 20, respectively; and the first bonding metal layer 40 formed on the protective layer 30 and abutting against the second bonding metal layer 50 of the flat optical waveguide. Therefore, the first bonding metal layer 40 and the second bonding metal layer 50 which are not bonded at sides of the flat optical waveguide can be fully utilized, thereby saving materials and simplifying the process.

At S500, two multi-layer flat optical waveguides are taken. One of the two multi-layer flat optical waveguides is cut into a plurality of first strip-shaped flat optical waveguides, and the other of the two multi-layer flat optical waveguides is cut into a plurality of second strip-shaped flat optical waveguides. An extension direction of the first strip-shaped flat optical waveguides is perpendicular to an extension direction of the second strip-shaped flat optical waveguides.

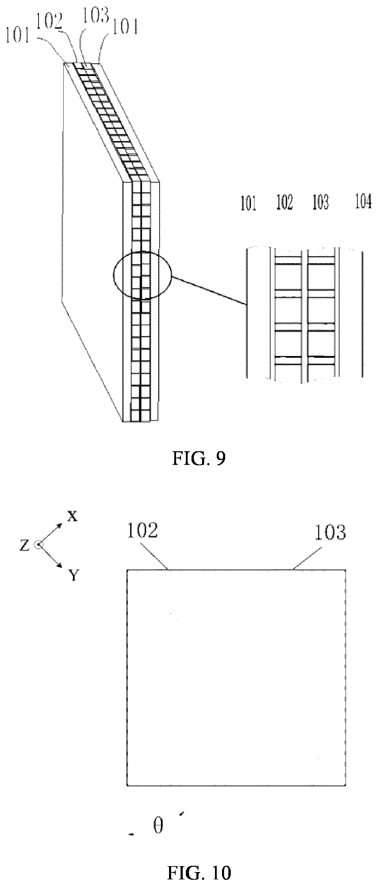

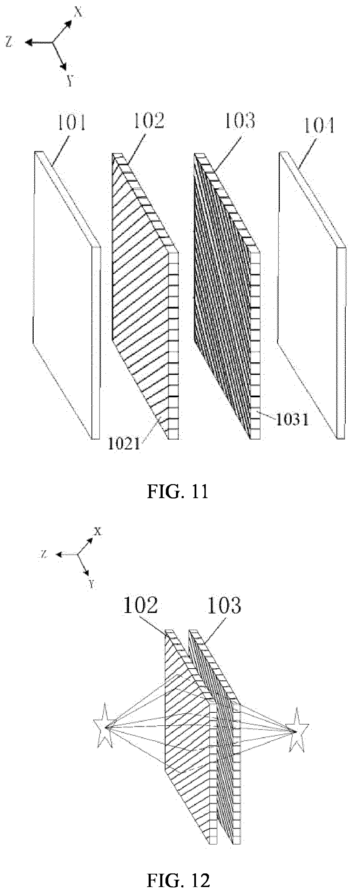

In this step, two multi-layer flat optical waveguides are taken. One of the two multi-layer flat optical waveguides is cut into a plurality of first strip-shaped flat optical waveguides 1021 to obtain a first optical waveguide array 102, and the other of the two multi-layer flat optical waveguides is cut into a plurality of second strip-shaped flat optical waveguides 1031 to obtain a second optical waveguide array 103. An extension direction of the first strip-shaped flat optical waveguides 1021 is perpendicular to an extension direction of the second strip-shaped flat optical waveguides 1031. The schematic diagram is as shown in FIG. 10 and FIG. 11. In an exemplary embodiment of the present disclosure, two multi-layer flat optical waveguides are taken. Surfaces of two multi-layer flat optical waveguides are polished and surfaces of the two multi-layer flat optical waveguides are made parallel to each other. Then, the two multi-layer flat optical waveguides are cut. One of the two multi-layer flat optical waveguides is cut into the plurality of first strip-shaped flat optical waveguides 1021 to obtain the first optical waveguide array 102, and the other of the two multi-layer flat optical waveguides is cut into the plurality of second strip-shaped flat optical waveguides 1031 to obtain the second optical waveguide array 103. In addition, an extension direction of the first strip-shaped flat optical waveguides 1021 is perpendicular to an extension direction of the second strip-shaped flat optical waveguides 1031. It should be noted that an angle θ is formed between the extension direction of the first strip-shaped flat optical waveguide 1021 and the second strip-shaped flat optical waveguide 1031 and an up-down direction of the multi-layer flat optical waveguide, where 30° ≤ θ ≤ 60°, and preferably θ=45°. In this case, an external appearance of the first optical waveguide array 102 and an external appearance of the second optical waveguide array 103 obtained are identical except that the extension direction of the first strip-shaped flat optical waveguide 1021 obtained by cutting is perpendicular to the extension direction of the second strip-shaped flat optical waveguide 1031 obtained by cutting. For example, the extension direction of the first strip-shaped flat optical waveguide 1021 is an X direction, the extension direction of the second strip-shaped flat optical waveguide 1031 is a Y direction, and a Z direction is a thickness direction of the multi-layer flat optical waveguide, where X direction, Y direction, and Z direction are mutually perpendicular.

At S600, the first optical waveguide array and the second optical waveguide array are stacked in the first direction. The extension direction of the plurality of first strip-shaped flat optical waveguides is perpendicular to the extension direction of the plurality of second strip-shaped flat optical waveguides after stacking, and protective window panes are applied on two sides.

In this step, the first optical waveguide array 102 and the second optical waveguide array 103 are stacked in the first direction. The extension direction of the plurality of first strip-shaped flat optical waveguides 1021 is perpendicular to the extension direction of the plurality of second strip-shaped flat optical waveguides 1031 after stacking. Then, a protective window pane 101 and a protective window pane 104 are applied, respectively, on two sides to obtain the equivalent negative refractive index flat lens 1. Reference can be made to FIG. 9. It should be noted that the first direction refers to a Z direction in FIG. 10, i.e., a thickness direction of the first optical waveguide array 102 and a thickness direction of the second optical waveguide array 103. The first optical waveguide array 102 and the second optical waveguide array 103 are flat structures arranged in a single row with multiple columns. In addition, the first optical waveguide array 102 and the second optical waveguide array 103 are orthogonal to each other, as shown in FIG. 12, which can realize point-to-point non-discriminatory imaging of the object and image sides. The prepared equivalent negative refractive index flat lens 1 can make a two-dimensional or three-dimensional light source directly form a real image in the air and realize a real holographic image. A wide field-of-view, a large aperture, high resolution, and imaging performance free of distortion and chromatic dispersion is realized, together with naked-eye 3D stereoscopic display capability.

To sum up, the method uses the first bonding metal layer 40 and the second bonding metal layer 50 as the bonding layers. In this way, internal stress-strain caused by resin-based adhesives used in the related art as the bonding layer during curing can be avoided from adversely affecting the imaging quality. Moreover, the thickness of the bonding layer is reduced, thereby further improving the imaging quality of the lens. Also, the metal has high stability and thus can enhance the aging performance.

In a second aspect of the disclosure, the present disclosure provides an equivalent negative refractive index flat lens 1. According to the embodiments of the present disclosure, the equivalent negative refractive index flat lens 1 is prepared by the above-described method. Therefore, imaging quality of the equivalent negative refractive index flat lens 1 can be improved. It should be noted that features and advantages described above for the method for preparing the equivalent negative refractive index flat lens 1 are equally applicable to the equivalent negative refractive index flat lens 1, and will not be repeatedly described here.

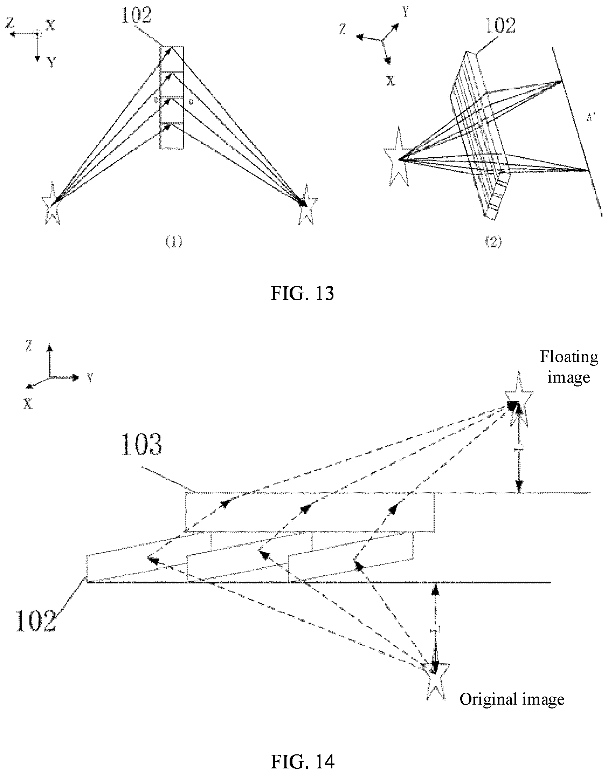

With the equivalent negative refractive index flat lens 1 according to the embodiments of the present disclosure, an imaging principle of the equivalent negative refractive index flat lens 1 is as follows: the first optical waveguide array 102 and the second optical waveguide array 102 are analyzed independently. Taking the first optical waveguide array 102 as an example, as illustrated in FIG. 13, in the single-layer first optical waveguide array 102, a light ray emitted from a single object point on the object side passes through one side of the equivalent negative refractive index flat lens 1. Subsequently, the light ray is split and mirror-modulated by individual rows of waveguides, and then re-converges on a straight line parallel to long edges of the waveguides, thereby forming a one-dimensional point-to-line imaging effect. As illustrated in FIG. 14, to achieve convergence of light rays in both directions at a single point, the first optical waveguide array 102 and the second optical waveguide array 103 need to be used together. The first strip-shaped flat optical waveguide 1021 in the first optical waveguide array 102 and the second strip-shaped flat optical waveguide 1031 in the second optical waveguide array 103 are arranged perpendicularly to each other, enabling point-to-point modulation of the target object image. Therefore, light rays from any direction passing through this orthogonally arranged dual-layer waveguide array can re-converge at symmetric positions relative to the waveguide arrays, forming a floating real image. An imaging distance of this floating real image is equal to a distance from an original object, achieving equidistant imaging. Moreover, the floating real image is formed in free space without requiring any medium or carrier, and the real image can be directly presented in the air.

In the present disclosure, the description with reference to the terms "one embodiment," "some embodiments," "an example," "a specific example," or "some examples," etc., means that specific features, structures, materials, or characteristics described in conjunction with the embodiment(s) or example(s) are included in at least one embodiment or example of the present disclosure. In the present disclosure, any illustrative reference of the above terms does not necessarily refer to the same embodiment(s) or example(s). Further, the particular features, structures, materials, or characteristics may be combined in any suitable manner in any one or more embodiments or examples. In addition, different embodiments or examples and features of different embodiments or examples described in the specification may be combined by those skilled in the art without mutual contradiction.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the invention defined by the following claims.

## Claims

1. A method for preparing an equivalent negative refractive index flat lens, the method comprising:
(1) forming reflective layers (20) on two opposite sides of a transparent substrate layer (10);
(2) forming protective layers (30) on the reflective layers, respectively;
(3) forming a first bonding metal layer (40) on one of the protective layers and a second bonding metal layer (50) on the other of the protective layers, to form a flat optical waveguide;
(4) stacking at least two flat optical waveguides in a first direction, wherein the first bonding metal layer in one flat optical waveguide of the at least two flat optical waveguides abuts against the second bonding metal layer in an adjacent flat optical waveguide adjacent to the one flat optical waveguide, and heating and applying a pressure to the at least two flat optical waveguides to integrate the first bonding metal layer and the second bonding metal layer that abut against each other, followed by annealing, to obtain a multi-layer flat optical waveguide;
(5) taking two multi-layer flat optical waveguides, cutting one of the two multi-layer flat optical waveguides into a plurality of first strip-shaped flat optical waveguides to obtain a first optical waveguide array, and cutting the other of the two multi-layer flat optical waveguides into a plurality of second strip-shaped flat optical waveguides to obtain a second optical waveguide array, wherein an extension direction of the first strip-shaped flat optical waveguides is perpendicular to an extension direction of the second strip-shaped flat optical waveguides; and
(6) stacking the first optical waveguide array and the second optical waveguide array in the first direction, enabling the extension direction of the plurality of first strip-shaped flat optical waveguides to be perpendicular to the extension direction of the plurality of second strip-shaped flat optical waveguides after said stacking, and applying protective window panes (101, 104) on two sides to obtain the equivalent negative refractive index flat lens.

2. The method according to claim 1, wherein in step (1), the transparent substrate layer has a length ranging from 10 mm to 10,000 mm, a width ranging from 10 mm to 10,000 mm, and a thickness ranging from 0.2 mm to 4 mm; and/or
wherein a material of the transparent substrate layer comprises at least one of transparent glass and quartz.

3. The method according to claim 1 or 2, wherein the reflective layer has a thickness ranging from 50 nm to 10 µm.

4. The method according to any one of claims 1 to 3, wherein a material of the reflective layer comprises at least one of a metallic reflective film and a dielectric reflective film,
optionally wherein the metallic reflective film comprises at least one of aluminum, silver, gold, and copper, and wherein the dielectric reflective film is a non-metallic oxide film.

5. The method according to any one of claims 1 to 4, wherein in step (2), the protective layer has a thickness ranging from 10 nm to 1 µm; and/or
wherein a material of the protective layer comprises at least one of silicon monoxide, magnesium fluoride, silicon dioxide, and aluminum trioxide.

6. The method according to any one of claims 1 to 5, wherein in step (3):
a material of the first bonding metal layer along a thickness direction of the first bonding metal layer is Ni/Au/In, Ni/Au, Cr/Au, Ni/Au/In, Ti/Au, Cr/Au/Ni/AuGe, Pd, Ti, Pt, Cr/Al/Cr/In, Ti/Cu, AuBe, or Cr/Sn; and
a material of the second bonding metal layer along a thickness direction of the second bonding metal layer is In/Au/Ni, In/Ni, In/Cr, In/Au/Pt/Ti, Au/Ti, GeAu/Ni/Au/Cr, Pd, Ti, Pt, In/Cr/Al/Cr, Cu/Ti, BeAu, or Sn/Cr, corresponding to the material of the first bonding metal layer in a one-to-one correspondence,
or wherein in step (3):
a material of the first bonding metal layer along a thickness direction of the first bonding metal layer is In/Au/Ni, In/Ni, In/Cr, In/Au/Pt/Ti, Au/Ti, GeAu/Ni/Au/Cr, Pd, Ti, Pt, In/Cr/Al/Cr, Cu/Ti, BeAu, or Sn/Cr; and
a material of the second bonding metal layer along the thickness direction of the second bonding metal layer is Ni/Au/In, Ni/Au, Cr/Au, Ni/Au/In, Ti/Au, Cr/Au/Ni/AuGe, Pd, Ti, Pt, Cr/Al/Cr/In, Ti/Cu, AuBe, or Cr/Sn, corresponding to the material of the first bonding metal layer in a one-to-one correspondence.

7. The method according to claim 6, wherein in step (3), a thickness ratio of metal Ni, **metal Au,** and metal In in the Ni/Au/In is (10 to 100):(10 to 100):(10 to 50);
wherein a thickness ratio of metal Ni to metal Au in the Ni/Au is (10 to 100):(50 to 1,000);
wherein a thickness ratio of metal Cr to metal Au in the Cr/Au is (10 to 100):(50 to 1,000);
wherein the thickness ratio of metal Ni, metal Au, and metal In in the Ni/Au/In is (10 to 100):(10 to 100):(10 to 100);
wherein a thickness ratio of metal Ti to metal Au in the Ti/Au is (10 to 100):(100 to 3,000);
wherein a thickness ratio of metal Cr, metal Au, metal Ni, and metal AuGe in the Cr/Au/Ni/AuGe is (10 to 100):(10 to 100):(10 to 100):(100 to 3,000);
wherein a thickness of the Pd ranges from 50 nm to 3,000 nm;
wherein a thickness of the Ti ranges from 50 nm to 3,000 nm;
wherein a thickness of the Pt ranges from 50 nm to 3,000 nm;
wherein a thickness ratio of metal Cr, metal Al, metal Cr, and metal In in the Cr/Al/Cr/In is (10 to 100):(10 to 100):(10 to 100):(10 to 100);
wherein a thickness ratio of metal Ti to metal Cu in the Ti/Cu is (10 to 100):(100 to 3,000);
wherein a thickness of the AuBe ranges from 50 nm to 3,000 nm; or
wherein a thickness ratio of metal Cr to metal Sn in the Cr/Sn is (10 to 100):(100 to 3,000).

8. The method according to claim 6 or 7, wherein in step (3), a thickness ratio of metal In, metal Au, and metal Ni in the In/Au/Ni is (10 to 50):(10 to 100):(10 to 100);
wherein a thickness ratio of metal In to metal Ni in the In/Ni is (10 to 100):(10 to 100);
wherein a thickness ratio of metal In to metal Cr in the In/Cr is (10 to 100):(10 to 100);
wherein a thickness ratio of metal In, metal Au, metal Pt, and metal Ti in the In/Au/Pt/Ti is (10 to 100):(10 to 100):(10 to 100):(10 to 100);
wherein a thickness ratio of metal Au to metal Ti in the Au/Ti is (100 to 3,000):(10 to 100);
wherein a thickness ratio of metal GeAu, metal Ni, metal Au, and metal Cr in the GeAu/Ni/Au/Cr is (100 to 3,000):(10 to 100):(10 to 100):(10 to 100);
wherein a thickness of the Pd ranges from 50 nm to 3,000 nm;
wherein a thickness of the Ti ranges from 50 nm to 3,000 nm;
wherein a thickness of the Pt ranges from 50 nm to 3,000 nm;
wherein a thickness ratio of metal In, metal Cr, metal Al, and metal Cr in the In/Cr/Al/Cr is (10 to 100):(10 to 100):(10 to 100):(10 to 100);
wherein a thickness ratio of metal Cu to metal Ti in the Cu/Ti is (100 to 3,000):(10 to 100);
wherein a thickness of metal BeAu in the BeAu ranges from 50 nm to 3,000 nm; or
wherein a thickness ratio of metal Sn to metal Cr in the Sn/Cr is (100 to 3,000):(10 to 100).

9. The method according to any one of claims 1 to 8, wherein in step (4), the pressure applied ranges from 1 Kgf to 50 kgf.

10. The method according to any one of claims 6 to 9, wherein a heating temperature of the Ni/Au/In and the In/Au/Ni ranges from 150°C to 200°C, and wherein a heating duration of the Ni/Au/In and the In/Au/Ni ranges from 1 h to 20 h;
wherein a heating temperature of the Ni/Au and the In/Ni ranges from 130°C to 200°C, and wherein a heating duration of the Ni/Au and the In/Ni ranges from 0.2 h to 5 h;
wherein a heating temperature of the Cr/Au and the In/Cr ranges from 130°C to 200°C, and wherein a heating duration of the Cr/Au and the In/Cr ranges from 0.2 h to 5 h;
wherein a heating temperature of the Ni/Au/In and the In/Au/Pt/Ti ranges from 150°C to 200°C, and wherein a heating duration of the Ni/Au/In and the In/Au/Pt/Ti ranges from 1 h to 20 h;
wherein a heating temperature of the Ti/Au and the Au/Ti ranges from 250°C to 350°C, and wherein a heating duration of the Ti/Au and the Au/Ti ranges from 1 h to 12 h;
wherein a heating temperature of the Cr/Au/Ni/AuGe and the GeAu/Ni/Au/Cr ranges from 150°C to 220°C, and wherein a heating duration of the Cr/Au/Ni/AuGe and the GeAu/Ni/Au/Cr ranges from 1 h to 20 h;
wherein a heating temperature of the Pd ranges from 100°C to 160°C, and wherein a heating duration of the Pd ranges from 1 h to 20 h;
wherein a heating temperature of the Ti ranges from 200°C to 400°C, and wherein the heating duration of the Ti ranges from 1 h to 20 h;
wherein a heating temperature of the Pt ranges from 200°C to 400°C, and wherein the heating duration of the Pt ranges from 1 h to 20 h;
wherein a heating temperature of the Cr/Al/Cr/In and the In/Cr/Al/Cr ranges from 150°C to 200°C, and wherein a heating duration of the Cr/Al/Cr/In and the In/Cr/Al/Cr ranges from 1 h to 20 h;
wherein a heating temperature of the Ti/Cu and the Cu/Ti ranges from 350°C to 500°C, and wherein a heating duration of the Ti/Cu and the Cu/Ti ranges from 1 h to 20 h;
wherein a heating temperature of the AuBe ranges from 150°C to 250°C, and wherein a heating duration of the AuBe ranges from 1 h to 20 h; or
wherein a heating temperature of the Cr/Sn and the Sn/Cr ranges from 90°C to 120°C, and wherein a heating duration of the Cr/Sn and the Sn/Cr ranges from 1 h to 20 h.

11. The method according to any one of claims 6 to 10, wherein in step (4), an annealing temperature of the Ni/Au/In and the In/Au/Ni ranges from 230°C to 300°C, and wherein an annealing duration of the Ni/Au/In and the In/Au/Ni ranges from 0.2 to 5 h;
wherein an annealing temperature of the Ni/Au and the In/Ni ranges from 300°C to 450°C, and wherein an annealing duration of the Ni/Au and the In/Ni ranges from 0.2 h to 5 h;
wherein an annealing temperature of the Cr/Au and the In/Cr ranges from 300°C to 450°C, and wherein an annealing duration of the Cr/Au and the In/Cr ranges from 0.2 h to 5 h;
wherein an annealing temperature of the Ni/Au/In and the In/Au/Pt/Ti ranges from 230°C to 300°C, and wherein an annealing duration of the Ni/Au/In and the In/Au/Pt/Ti ranges from 0.2 to 5 h;
wherein an annealing temperature of the Ti/Au and the Au/Ti ranges from 400°C to 500°C, and wherein an annealing duration of the Ti/Au and the Au/Ti ranges from 0.2 h to 10 h;
wherein an annealing temperature of the Cr/Au/Ni/AuGe and the GeAu/Ni/Au/Cr ranges from 300°C to 450°C, and an annealing duration of the Cr/Au/Ni/AuGe and the GeAu/Ni/Au/Cr ranges from 0.5 to 10 h;
wherein an annealing temperature of the Pd ranges from 200°C to 300°C, and wherein an annealing duration of the Pd ranges from 0.1 h to 5 h;
wherein an annealing temperature of the Cr/Al/Cr/In and the In/Cr/Al/Cr ranges from 250°C to 350°C, and wherein an annealing duration of the Cr/Al/Cr/In and the In/Cr/Al/Cr ranges from 0.1 h to 5 h;
wherein an annealing temperature of the Ti/Cu and the Cu/Ti is 550°C, and wherein a heating duration of the Ti/Cu and the Cu/Ti ranges from 0.3 to 5 h;
wherein an annealing temperature of the AuBe and the BeAu ranges from 280°C to 350°C, and wherein a heating duration of the AuBe and the BeAu ranges from 0.1 h to 2 h; or
wherein an annealing temperature of the Cr/Sn and the Sn/Cr ranges from 140°C to 200°C, and wherein a heating duration of the Cr/Sn and the Sn/Cr ranges from 0.5 h to 5 h.

12. The method according to any one of claims 1 to 11, further comprising, in step (4), subsequent to said stacking at least two flat optical waveguides in the first direction:
disposing a first bonding wafer on the stacked flat optical waveguides, and a second bonding wafer on a side of the stacked flat optical waveguides facing away from the first bonding wafer.

13. The method according to claim 12, wherein the first bonding wafer comprises:
the transparent substrate layer;
the reflective layers formed at two opposite sides of the transparent substrate layer;
the protective layers formed on the reflective layers, respectively; and
the second bonding metal layer formed on a bottom surface of the protective layer and abutting against the first bonding metal layer of the flat optical waveguide.

14. The method according to claim 12 or 13, wherein the second bonding wafer comprises:
the transparent substrate layer;
the reflective layers formed at two opposite sides of the transparent substrate layer;
the protective layers formed on the reflective layers, respectively; and
the first bonding metal layer formed on the protective layer and abutting against the second bonding metal layer of the flat optical waveguide.

15. An equivalent negative refractive index flat lens, wherein the equivalent negative refractive index flat lens is prepared by the method according to any one of claims 1 to 14.

## Patentansprüche

1. Verfahren zur Herstellung einer Flachlinse mit äquivalentem negativem Brechungsindex, wobei das Verfahren Folgendes umfasst:
(1) Ausbilden von Reflexionsschichten (20) auf zwei einander gegenüberliegenden Seiten einer transparenten Substratschicht (10);
(2) Ausbilden von Schutzschichten (30) jeweils auf den Reflexionsschichten;
(3) Ausbilden einer ersten Bonding-Metallschicht (40) auf einer der Schutzschichten und einer zweiten Bonding-Metallschicht (50) auf der anderen der Schutzschichten, um einen flachen optischen Wellenleiter auszubilden;
(4) Stapeln von mindestens zwei flachen optischen Wellenleitern in einer ersten Richtung, wobei die erste Bonding-Metallschicht in einem flachen optischen Wellenleiter der mindestens zwei flachen optischen Wellenleiter an der zweiten Bonding-Metallschicht in einem zu dem einen flachen optischen Wellenleiter benachbarten flachen optischen Wellenleiter anliegt, und Erwärmen und Beaufschlagen der mindestens zwei flachen optischen Wellenleiter mit einem Druck, um die erste Bonding-Metallschicht und die zweite Bonding-Metallschicht, die aneinander anliegen, miteinander zu vereinigen, und anschließendes Glühen, um einen mehrschichtigen flachen optischen Wellenleiter zu erhalten;
(5) Bereitstellen von zwei mehrschichtigen flachen optischen Wellenleitern, Schneiden eines der zwei mehrschichtigen flachen optischen Wellenleiter in mehrere erste streifenförmige flache optische Wellenleiter, um ein erstes optisches Wellenleiterarray zu erhalten, und Schneiden des anderen der zwei mehrschichtigen flachen optischen Wellenleiter in mehrere zweite streifenförmige flache optische Wellenleiter, um ein zweites optisches Wellenleiterarray zu erhalten, wobei eine Erstreckungsrichtung der ersten streifenförmigen flachen optischen Wellenleiter senkrecht zu einer Erstreckungsrichtung der zweiten streifenförmigen flachen optischen Wellenleiter ist; und
(6) Stapeln des ersten optischen Wellenleiterarrays und des zweiten optischen Wellenleiterarrays in der ersten Richtung, sodass die Erstreckungsrichtung der mehreren ersten streifenförmigen flachen optischen Wellenleiter nach dem Stapeln senkrecht zu der Erstreckungsrichtung der mehreren zweiten streifenförmigen flachen optischen Wellenleiter ist, und Anbringen von Schutzfensterplatten (101, 104) an zwei Seiten, um die Flachlinse mit äquivalentem negativem Brechungsindex zu erhalten.

2. Verfahren nach Anspruch 1, wobei in Schritt (1) die transparente Substratschicht eine Länge von 10 mm bis 10.000 mm, eine Breite von 10 mm bis 10.000 mm und eine Dicke von 0,2 mm bis 4 mm aufweist; und/oder
wobei ein Material der transparenten Substratschicht mindestens eines aus transparentem Glas und Quarz umfasst.

3. Verfahren nach Anspruch 1 oder 2, wobei die Reflexionsschicht eine Dicke von 50 nm bis 10 µm aufweist.

4. Verfahren nach einem der Ansprüche 1 bis 3, wobei ein Material der Reflexionsschicht mindestens eines aus einem metallischen Reflexionsfilm und einem dielektrischen Reflexionsfilm umfasst,
wobei gegebenenfalls der metallische Reflexionsfilm mindestens eines aus Aluminium, Silber, Gold und Kupfer umfasst und der dielektrische Reflexionsfilm ein nichtmetallischer Oxidfilm ist.

5. Verfahren nach einem der Ansprüche 1 bis 4, wobei in Schritt (2) die Schutzschicht eine Dicke von 10 nm bis 1 µm aufweist; und/oder
wobei ein Material der Schutzschicht mindestens eines aus Siliciummonoxid, Magnesiumfluorid, Siliciumdioxid und Aluminiumtrioxid umfasst.

6. Verfahren nach einem der Ansprüche 1 bis 5, wobei in Schritt (3):
das Material der ersten Bonding-Metallschicht entlang einer Dickenrichtung der ersten Bonding-Metallschicht Ni/Au/In, Ni/Au, Cr/Au, Ni/Au/In, Ti/Au, Cr/Au/Ni/AuGe, Pd, Ti, Pt, Cr/Al/Cr/In, Ti/Cu, AuBe oder Cr/Sn ist; und
das Material der zweiten Bonding-Metallschicht entlang einer Dickenrichtung der zweiten Bonding-Metallschicht In/Au/Ni, In/Ni, In/Cr, In/Au/Pt/Ti, Au/Ti, GeAu/Ni/Au/Cr, Pd, Ti, Pt, In/Cr/Al/Cr, Cu/Ti, BeAu oder Sn/Cr ist, wobei es dem Material der ersten Bonding-Metallschicht in einer Eins-zu-eins-Zuordnung entspricht,
oder wobei in Schritt (3):
das Material der ersten Bonding-Metallschicht entlang einer Dickenrichtung der ersten Bonding-Metallschicht In/Au/Ni, In/Ni, In/Cr, In/Au/Pt/Ti, Au/Ti, GeAu/Ni/Au/Cr, Pd, Ti, Pt, In/Cr/Al/Cr, Cu/Ti, BeAu oder Sn/Cr ist; und
das Material der zweiten Bonding-Metallschicht entlang der Dickenrichtung der zweiten Bonding-Metallschicht Ni/Au/In, Ni/Au, Cr/Au, Ni/Au/In, Ti/Au, Cr/Au/Ni/AuGe, Pd, Ti, Pt, Cr/Al/Cr/In, Ti/Cu, AuBe oder Cr/Sn ist, wobei es dem Material der ersten Bonding-Metallschicht in einer Eins-zu-eins-Zuordnung entspricht.

7. Verfahren nach Anspruch 6, wobei in Schritt (3) ein Dickenverhältnis von Metall Ni, Metall Au und Metall In in Ni/Au/In (10 bis 100):(10 bis 100):(10 bis 50) beträgt;
wobei ein Dickenverhältnis von Metall Ni zu Metall Au in Ni/Au (10 bis 100):(50 bis 1.000) beträgt;
wobei ein Dickenverhältnis von Metall Cr zu Metall Au in Cr/Au (10 bis 100):(50 bis 1.000) beträgt;
wobei das Dickenverhältnis von Metall Ni, Metall Au und Metall In in Ni/Au/In (10 bis 100):(10 bis 100):(10 bis 100) beträgt;
wobei ein Dickenverhältnis von Metall Ti zu Metall Au in Ti/Au (10 bis 100):(100 bis 3.000) beträgt;
wobei ein Dickenverhältnis von Metall Cr, Metall Au, Metall Ni und Metall AuGe in Cr/Au/Ni/AuGe (10 bis 100):(10 bis 100):(10 bis 100):(100 bis 3.000) beträgt;
wobei eine Dicke des Pd 50 nm bis 3.000 nm beträgt;
wobei eine Dicke des Ti 50 nm bis 3.000 nm beträgt;
wobei eine Dicke des Pt 50 nm bis 3.000 nm beträgt;
wobei ein Dickenverhältnis von Metall Cr, Metall Al, Metall Cr und Metall In in Cr/Al/Cr/In (10 bis 100):(10 bis 100):(10 bis 100):(10 bis 100) beträgt;
wobei ein Dickenverhältnis von Metall Ti zu Metall Cu in Ti/Cu (10 bis 100):(100 bis 3.000) beträgt;
wobei eine Dicke des AuBe 50 nm bis 3.000 nm beträgt; oder
wobei ein Dickenverhältnis von Metall Cr zu Metall Sn in Cr/Sn (10 bis 100):(100 bis 3.000) beträgt.

8. Verfahren nach Anspruch 6 oder 7, wobei in Schritt (3) ein Dickenverhältnis von Metall In, Metall Au und Metall Ni in In/Au/Ni (10 bis 50):(10 bis 100):(10 bis 100) beträgt;
wobei ein Dickenverhältnis von Metall In zu Metall Ni in In/Ni (10 bis 100):(10 bis 100) beträgt;
wobei ein Dickenverhältnis von Metall In zu Metall Cr in In/Cr (10 bis 100):(10 bis 100) beträgt;
wobei ein Dickenverhältnis von Metall In, Metall Au, Metall Pt und Metall Ti in In/Au/Pt/Ti (10 bis 100):(10 bis 100):(10 bis 100):(10 bis 100) beträgt;
wobei ein Dickenverhältnis von Metall Au zu Metall Ti in Au/Ti (100 bis 3.000):(10 bis 100) beträgt;
wobei ein Dickenverhältnis von Metall GeAu, Metall Ni, Metall Au und Metall Cr in GeAu/Ni/Au/Cr (100 bis 3.000):(10 bis 100):(10 bis 100):(10 bis 100) beträgt;
wobei eine Dicke des Pd 50 nm bis 3.000 nm beträgt;
wobei eine Dicke des Ti 50 nm bis 3.000 nm beträgt;
wobei eine Dicke des Pt 50 nm bis 3.000 nm beträgt;
wobei ein Dickenverhältnis von Metall In, Metall Cr, Metall Al und Metall Cr in In/Cr/Al/Cr (10 bis 100):(10 bis 100):(10 bis 100):(10 bis 100) beträgt;
wobei ein Dickenverhältnis von Metall Cu zu Metall Ti in Cu/Ti (100 bis 3.000):(10 bis 100) beträgt;
wobei eine Dicke von Metall BeAu in BeAu 50 nm bis 3.000 nm beträgt; oder
wobei ein Dickenverhältnis von Metall Sn zu Metall Cr in Sn/Cr (100 bis 3.000):(10 bis 100) beträgt.

9. Verfahren nach einem der Ansprüche 1 bis 8, wobei in Schritt (4) der aufgebrachte Druck 1 Kgf bis 50 kgf beträgt.

10. Verfahren nach einem der Ansprüche 6 bis 9, wobei eine Erwärmungstemperatur von Ni/Au/In und In/Au/Ni 150°C bis 200°C beträgt und wobei eine Erwärmungsdauer von Ni/Au/In und In/Au/Ni 1 h bis 20 h beträgt;
wobei eine Erwärmungstemperatur von Ni/Au und In/Ni 130°C bis 200°C beträgt und wobei eine Erwärmungsdauer von Ni/Au und In/Ni 0,2 h bis 5 h beträgt;
wobei eine Erwärmungstemperatur von Cr/Au und In/Cr 130°C bis 200°C beträgt und wobei eine Erwärmungsdauer von Cr/Au und In/Cr 0,2 h bis 5 h beträgt;
wobei eine Erwärmungstemperatur von Ni/Au/In und In/Au/Pt/Ti 150°C bis 200°C beträgt und wobei eine Erwärmungsdauer von Ni/Au/In und In/Au/Pt/Ti 1 h bis 20 h beträgt;
wobei eine Erwärmungstemperatur von Ti/Au und Au/Ti 250°C bis 350°C beträgt und wobei eine Erwärmungsdauer von Ti/Au und Au/Ti 1 h bis 12 h beträgt;
wobei eine Erwärmungstemperatur von Cr/Au/Ni/AuGe und GeAu/Ni/Au/Cr 150°C bis 220°C beträgt und wobei eine Erwärmungsdauer von Cr/Au/Ni/AuGe und GeAu/Ni/Au/Cr 1 h bis 20 h beträgt;
wobei eine Erwärmungstemperatur des Pd 100°C bis 160°C beträgt und wobei eine Erwärmungsdauer des Pd 1 h bis 20 h beträgt;
wobei eine Erwärmungstemperatur des Ti 200°C bis 400°C beträgt und wobei die Erwärmungsdauer des Ti 1 h bis 20 h beträgt;
wobei eine Erwärmungstemperatur des Pt 200°C bis 400°C beträgt und wobei die Erwärmungsdauer des Pt 1 h bis 20 h beträgt;
wobei eine Erwärmungstemperatur von Cr/Al/Cr/In und In/Cr/Al/Cr 150°C bis 200°C beträgt und wobei eine Erwärmungsdauer von Cr/Al/Cr/In und In/Cr/Al/Cr 1 h bis 20 h beträgt;
wobei eine Erwärmungstemperatur von Ti/Cu und Cu/Ti 350°C bis 500°C beträgt und wobei eine Erwärmungsdauer von Ti/Cu und Cu/Ti 1 h bis 20 h beträgt;
wobei eine Erwärmungstemperatur des AuBe 150°C bis 250°C beträgt und wobei eine Erwärmungsdauer des AuBe 1 h bis 20 h beträgt; oder
wobei eine Erwärmungstemperatur von Cr/Sn und Sn/Cr 90°C bis 120°C beträgt und wobei eine Erwärmungsdauer von Cr/Sn und Sn/Cr 1 h bis 20 h beträgt.

11. Verfahren nach einem der Ansprüche 6 bis 10, wobei in Schritt (4) eine Glühtemperatur von Ni/Au/In und In/Au/Ni 230°C bis 300°C beträgt und wobei eine Glühdauer von Ni/Au/In und In/Au/Ni 0,2 bis 5 h beträgt;
wobei eine Glühtemperatur von Ni/Au und In/Ni 300°C bis 450°C beträgt und wobei eine Glühdauer von Ni/Au und In/Ni 0,2 h bis 5 h beträgt;
wobei eine Glühtemperatur von Cr/Au und In/Cr 300°C bis 450°C beträgt und wobei eine Glühdauer von Cr/Au und In/Cr 0,2 h bis 5 h beträgt;
wobei eine Glühtemperatur von Ni/Au/In und In/Au/Pt/Ti 230°C bis 300°C beträgt und wobei eine Glühdauer von Ni/Au/In und In/Au/Pt/Ti 0,2 bis 5 h beträgt;
wobei eine Glühtemperatur von Ti/Au und Au/Ti 400°C bis 500°C beträgt und wobei eine Glühdauer von Ti/Au und Au/Ti 0,2 h bis 10 h beträgt;
wobei eine Glühtemperatur von Cr/Au/Ni/AuGe und GeAu/Ni/Au/Cr 300°C bis 450°C beträgt und eine Glühdauer von Cr/Au/Ni/AuGe und GeAu/Ni/Au/Cr 0,5 bis 10 h beträgt;
wobei eine Glühtemperatur des Pd 200°C bis 300°C beträgt und wobei eine Glühdauer des Pd 0,1 h bis 5 h beträgt;
wobei eine Glühtemperatur von Cr/Al/Cr/In und In/Cr/Al/Cr 250°C bis 350°C beträgt und wobei eine Glühdauer von Cr/Al/Cr/In und In/Cr/Al/Cr 0,1 h bis 5 h beträgt;
wobei eine Glühtemperatur von Ti/Cu und Cu/Ti 550°C beträgt und wobei eine Erwärmungsdauer von Ti/Cu und Cu/Ti 0,3 bis 5 h beträgt;
wobei eine Glühtemperatur von AuBe und BeAu 280°C bis 350°C beträgt und wobei eine Erwärmungsdauer von AuBe und BeAu 0,1 h bis 2 h beträgt; oder
wobei eine Glühtemperatur von Cr/Sn und Sn/Cr 140°C bis 200°C beträgt und wobei eine Erwärmungsdauer von Cr/Sn und Sn/Cr 0,5 h bis 5 h beträgt.

12. Verfahren nach einem der Ansprüche 1 bis 11, wobei das Verfahren in Schritt (4) nach dem Stapeln von mindestens zwei flachen optischen Wellenleitern in der ersten Richtung ferner umfasst:
Anordnen eines ersten Bonding-Wafers auf den gestapelten flachen optischen Wellenleitern und eines zweiten Bonding-Wafers auf einer dem ersten Bonding-Wafer abgewandten Seite der gestapelten flachen optischen Wellenleiter.

13. Verfahren nach Anspruch 12, wobei der erste Bonding-Wafer umfasst:
die transparente Substratschicht;
die auf zwei einander gegenüberliegenden Seiten der transparenten Substratschicht ausgebildeten Reflexionsschichten;
die jeweils auf den Reflexionsschichten ausgebildeten Schutzschichten; und
die auf einer Unterseite der Schutzschicht ausgebildete zweite Bonding-Metallschicht, die an der ersten Bonding-Metallschicht des flachen optischen Wellenleiters anliegt.

14. Verfahren nach Anspruch 12 oder 13, wobei der zweite Bonding-Wafer umfasst:
die transparente Substratschicht;
die auf zwei einander gegenüberliegenden Seiten der transparenten Substratschicht ausgebildeten Reflexionsschichten;
die jeweils auf den Reflexionsschichten ausgebildeten Schutzschichten; und
die auf der Schutzschicht ausgebildete erste Bonding-Metallschicht, die an der zweiten Bonding-Metallschicht des flachen optischen Wellenleiters anliegt.

15. Flachlinse mit äquivalentem negativem Brechungsindex, wobei die Flachlinse mit äquivalentem negativem Brechungsindex nach dem Verfahren gemäß einem der Ansprüche 1 bis 14 hergestellt ist.

## Revendications

1. Une méthode de préparation d'une lentille plate à indice de réfraction négatif équivalent, la méthode comprenant :
(1) la formation de couches réfléchissantes (20) sur deux côtés opposés d'une couche de substrat transparent (10) ;
(2) la formation de couches de protection (30) sur les couches réfléchissantes, respectivement ;
(3) la formation d'une première couche métallique de liaison (40) sur l'une des couches de protection et d'une deuxième couche métallique de liaison (50) sur l'autre des couches de protection, pour former un guide d'onde optique plat ;
(4) l'empilement d'au moins deux guides d'onde optiques plats dans une première direction, dans lequel la première couche métallique de liaison dans un guide d'onde optique plat des au moins deux guides d'onde optiques plats vient en butée contre la deuxième couche métallique de liaison dans un guide d'onde optique plat adjacent adjacent à ce guide d'onde optique plat, et le chauffage et l'application d'une pression aux au moins deux guides d'onde optiques plats pour intégrer la première couche métallique de liaison et la deuxième couche métallique de liaison qui viennent en butée l'une contre l'autre, suivis d'un recuit, pour obtenir un guide d'onde optique plat multicouche ;
(5) la prise de deux guides d'onde optiques plats multicouches, la découpe de l'un des deux guides d'onde optiques plats multicouches en une pluralité de premiers guides d'onde optiques plats en forme de bande pour obtenir un premier réseau de guides d'onde optiques, et la découpe de l'autre des deux guides d'onde optiques plats multicouches en une pluralité de deuxièmes guides d'onde optiques plats en forme de bande pour obtenir un deuxième réseau de guides d'onde optiques, dans lequel une direction d'extension des premiers guides d'onde optiques plats en forme de bande est perpendiculaire à une direction d'extension des deuxièmes guides d'onde optiques plats en forme de bande ; et
(6) l'empilement du premier réseau de guides d'onde optiques et du deuxième réseau de guides d'onde optiques dans la première direction, permettant à la direction d'extension de la pluralité de premiers guides d'onde optiques plats en forme de bande d'être perpendiculaire à la direction d'extension de la pluralité de deuxièmes guides d'onde optiques plats en forme de bande après ledit empilement, et l'application de vitres de protection (101, 104) sur deux côtés pour obtenir la lentille plate à indice de réfraction négatif équivalent.

2. La méthode selon la revendication 1, dans laquelle, à l'étape (1), la couche de substrat transparent a une longueur allant de 10 mm à 10 000 mm, une largeur allant de 10 mm à 10 000 mm, et une épaisseur allant de 0,2 mm à 4 mm ; et/ou
dans laquelle un matériau de la couche de substrat transparent comprend au moins l'un parmi du verre transparent et du quartz.

3. La méthode selon la revendication 1 ou 2, dans laquelle la couche réfléchissante a une épaisseur allant de 50 nm à 10 µm.

4. La méthode selon l'une quelconque des revendications 1 à 3, dans laquelle un matériau de la couche réfléchissante comprend au moins l'un d'un film réfléchissant métallique et d'un film réfléchissant diélectrique,
facultativement dans laquelle le film réfléchissant métallique comprend au moins l'un parmi l'aluminium, l'argent, l'or et le cuivre, et dans laquelle le film réfléchissant diélectrique est un film d'oxyde non métallique.

5. La méthode selon l'une quelconque des revendications 1 à 4, dans laquelle, à l'étape (2), la couche de protection a une épaisseur allant de 10 nm à 1 µm ; et/ou
dans laquelle un matériau de la couche de protection comprend au moins l'un parmi le monoxyde de silicium, le fluorure de magnésium, le dioxyde de silicium et le trioxyde d'aluminium.

6. La méthode selon l'une quelconque des revendications 1 à 5, dans laquelle, à l'étape (3) :
un matériau de la première couche métallique de liaison le long d'une direction de l'épaisseur de la première couche métallique de liaison est Ni/Au/In, Ni/Au, Cr/Au, Ni/Au/In, Ti/Au, Cr/Au/Ni/AuGe, Pd, Ti, Pt, Cr/Al/Cr/In, Ti/Cu, AuBe ou Cr/Sn ; et
un matériau de la deuxième couche métallique de liaison le long d'une direction de l'épaisseur de la deuxième couche métallique de liaison est In/Au/Ni, In/Ni, In/Cr, In/Au/Pt/Ti, Au/Ti, GeAu/Ni/Au/Cr, Pd, Ti, Pt, In/Cr/Al/Cr, Cu/Ti, BeAu ou Sn/Cr, correspondant au matériau de la première couche métallique de liaison dans une correspondance biunivoque,
ou dans laquelle, à l'étape (3) :
un matériau de la première couche métallique de liaison le long d'une direction de l'épaisseur de la première couche métallique de liaison est In/Au/Ni, In/Ni, In/Cr, In/Au/Pt/Ti, Au/Ti, GeAu/Ni/Au/Cr, Pd, Ti, Pt, In/Cr/Al/Cr, Cu/Ti, BeAu ou Sn/Cr ; et
un matériau de la deuxième couche métallique de liaison le long de la direction de l'épaisseur de la deuxième couche métallique de liaison est Ni/Au/In, Ni/Au, Cr/Au, Ni/Au/In, Ti/Au, Cr/Au/Ni/AuGe, Pd, Ti, Pt, Cr/Al/Cr/In, Ti/Cu, AuBe ou Cr/Sn, correspondant au matériau de la première couche métallique de liaison dans une correspondance biunivoque.

7. La méthode selon la revendication 6, dans laquelle, à l'étape (3), un rapport d'épaisseur du métal Ni, du métal Au et du métal In dans le Ni/Au/In est de (10 à 100):(10 à 100):(10 à 50) ;
dans laquelle un rapport d'épaisseur du métal Ni au métal Au dans le Ni/Au est de (10 à 100):(50 à 1 000) ;
dans laquelle un rapport d'épaisseur du métal Cr au métal Au dans le Cr/Au est de (10 à 100):(50 à 1 000) ;
dans laquelle le rapport d'épaisseur du métal Ni, du métal Au et du métal In dans le Ni/Au/In est de (10 à 100):(10 à 100):(10 à 100) ;
dans laquelle un rapport d'épaisseur du métal Ti au métal Au dans le Ti/Au est de (10 à 100):(100 à 3 000) ;
dans laquelle un rapport d'épaisseur du métal Cr, du métal Au, du métal Ni et du métal AuGe dans le Cr/Au/Ni/AuGe est de (10 à 100):(10 à 100):(10 à 100):(100 à 3 000) ;
dans laquelle une épaisseur du Pd va de 50 nm à 3 000 nm ;
dans laquelle une épaisseur du Ti va de 50 nm à 3 000 nm ;
dans laquelle une épaisseur du Pt va de 50 nm à 3 000 nm ;
dans laquelle un rapport d'épaisseur du métal Cr, du métal Al, du métal Cr et du métal In dans le Cr/Al/Cr/In est de (10 à 100):(10 à 100):(10 à 100):(10 à 100) ;
dans laquelle un rapport d'épaisseur du métal Ti au métal Cu dans le Ti/Cu est de (10 à 100):(100 à 3 000) ;
dans laquelle une épaisseur du AuBe va de 50 nm à 3 000 nm ; ou
dans laquelle un rapport d'épaisseur du métal Cr au métal Sn dans le Cr/Sn est de (10 à 100):(100 à 3 000).

8. La méthode selon la revendication 6 ou 7, dans laquelle, à l'étape (3), un rapport d'épaisseur du métal In, du métal Au et du métal Ni dans le In/Au/Ni est de (10 à 50):(10 à 100):(10 à 100) ;
dans laquelle un rapport d'épaisseur du métal In au métal Ni dans le In/Ni est de (10 à 100):(10 à 100) ;
dans laquelle un rapport d'épaisseur du métal In au métal Cr dans le In/Cr est de (10 à 100):(10 à 100) ;
dans laquelle un rapport d'épaisseur du métal In, du métal Au, du métal Pt et du métal Ti dans le In/Au/Pt/Ti est de (10 à 100):(10 à 100):(10 à 100):(10 à 100) ;
dans laquelle un rapport d'épaisseur du métal Au au métal Ti dans le Au/Ti est de (100 à 3 000):(10 à 100) ;
dans laquelle un rapport d'épaisseur du métal GeAu, du métal Ni, du métal Au et du métal Cr dans le GeAu/Ni/Au/Cr est de (100 à 3 000):(10 à 100):(10 à 100):(10 à 100) ;
dans laquelle une épaisseur du Pd va de 50 nm à 3 000 nm ;
dans laquelle une épaisseur du Ti va de 50 nm à 3 000 nm ;
dans laquelle une épaisseur du Pt va de 50 nm à 3 000 nm ;
dans laquelle un rapport d'épaisseur du métal In, du métal Cr, du métal Al et du métal Cr dans le In/Cr/Al/Cr est de (10 à 100):(10 à 100):(10 à 100):(10 à 100) ;
dans laquelle un rapport d'épaisseur du métal Cu au métal Ti dans le Cu/Ti est de (100 à 3 000):(10 à 100) ;
dans laquelle une épaisseur du métal BeAu dans le BeAu va de 50 nm à 3 000 nm ; ou
dans laquelle un rapport d'épaisseur du métal Sn au métal Cr dans le Sn/Cr est de (100 à 3 000):(10 à 100).

9. La méthode selon l'une quelconque des revendications 1 à 8, dans laquelle, à l'étape (4), la pression appliquée va de 1 kgf à 50 kgf

10. La méthode selon l'une quelconque des revendications 6 à 9, dans laquelle une température de chauffage du Ni/Au/In et du In/Au/Ni va de 150 °C à 200 °C, et dans laquelle une durée de chauffage du Ni/Au/In et du In/Au/Ni va de 1 h à 20 h ;
dans laquelle une température de chauffage du Ni/Au et du In/Ni va de 130 °C à 200 °C, et dans laquelle une durée de chauffage du Ni/Au et du In/Ni va de 0,2 h à 5 h ;
dans laquelle une température de chauffage du Cr/Au et du In/Cr va de 130 °C à 200 °C, et dans laquelle une durée de chauffage du Cr/Au et du In/Cr va de 0,2 h à 5 h ;
dans laquelle une température de chauffage du Ni/Au/In et du In/Au/Pt/Ti va de 150 °C à 200 °C, et dans laquelle une durée de chauffage du Ni/Au/In et du In/Au/Pt/Ti va de 1 h à 20 h ;
dans laquelle une température de chauffage du Ti/Au et du Au/Ti va de 250 °C à 350 °C, et dans laquelle une durée de chauffage du Ti/Au et du Au/Ti va de 1 h à 12 h ;
dans laquelle une température de chauffage du Cr/Au/Ni/AuGe et du GeAu/Ni/Au/Cr va de 150 °C à 220 °C, et dans laquelle une durée de chauffage du Cr/Au/Ni/AuGe et du GeAu/Ni/Au/Cr va de 1 h à 20 h ;
dans laquelle une température de chauffage du Pd va de 100 °C à 160 °C, et dans laquelle une durée de chauffage du Pd va de 1 h à 20 h ;
dans laquelle une température de chauffage du Ti va de 200 °C à 400 °C, et dans laquelle la durée de chauffage du Ti va de 1 h à 20 h ;
dans laquelle une température de chauffage du Pt va de 200 °C à 400 °C, et dans laquelle la durée de chauffage du Pt va de 1 h à 20 h ;
dans laquelle une température de chauffage du Cr/Al/Cr/In et du In/Cr/Al/Cr va de 150 °C à 200 °C, et dans laquelle une durée de chauffage du Cr/Al/Cr/In et du In/Cr/Al/Cr va de 1 h à 20 h ;
dans laquelle une température de chauffage du Ti/Cu et du Cu/Ti va de 350 °C à 500 °C, et dans laquelle une durée de chauffage du Ti/Cu et du Cu/Ti va de 1 h à 20 h ;
dans laquelle une température de chauffage du AuBe va de 150 °C à 250 °C, et dans laquelle une durée de chauffage du AuBe va de 1 h à 20 h ; ou
dans laquelle une température de chauffage du Cr/Sn et du Sn/Cr va de 90 °C à 120 °C, et dans laquelle une durée de chauffage du Cr/Sn et du Sn/Cr va de 1 h à 20 h.

11. La méthode selon l'une quelconque des revendications 6 à 10, dans laquelle, à l'étape (4), une température de recuit du Ni/Au/In et du In/Au/Ni va de 230 °C à 300 °C, et dans laquelle une durée de recuit du Ni/Au/In et du In/Au/Ni va de 0,2 à 5 h ;
dans laquelle une température de recuit du Ni/Au et du In/Ni va de 300 °C à 450 °C, et dans laquelle une durée de recuit du Ni/Au et du In/Ni va de 0,2 h à 5 h ;
dans laquelle une température de recuit du Cr/Au et du In/Cr va de 300 °C à 450 °C, et dans laquelle une durée de recuit du Cr/Au et du In/Cr va de 0,2 h à 5 h ;
dans laquelle une température de recuit du Ni/Au/In et du In/Au/Pt/Ti va de 230 °C à 300 °C, et dans laquelle une durée de recuit du Ni/Au/In et du In/Au/Pt/Ti va de 0,2 à 5 h ;
dans laquelle une température de recuit du Ti/Au et du Au/Ti va de 400 °C à 500 °C, et dans laquelle une durée de recuit du Ti/Au et du Au/Ti va de 0,2 h à 10 h ;
dans laquelle une température de recuit du Cr/Au/Ni/AuGe et du GeAu/Ni/Au/Cr va de 300 °C à 450 °C, et une durée de recuit du Cr/Au/Ni/AuGe et du GeAu/Ni/Au/Cr va de 0,5 à 10 h ;
dans laquelle une température de recuit du Pd va de 200 °C à 300 °C, et dans laquelle une durée de recuit du Pd va de 0,1 h à 5 h ;
dans laquelle une température de recuit du Cr/Al/Cr/In et du In/Cr/Al/Cr va de 250 °C à 350 °C, et dans laquelle une durée de recuit du Cr/Al/Cr/In et du In/Cr/Al/Cr va de 0,1 h à 5 h ;
dans laquelle une température de recuit du Ti/Cu et du Cu/Ti est de 550 °C, et dans laquelle une durée de chauffage du Ti/Cu et du Cu/Ti va de 0,3 à 5 h ;
dans laquelle une température de recuit du AuBe et du BeAu va de 280 °C à 350 °C, et dans laquelle une durée de chauffage du AuBe et du BeAu va de 0,1 h à 2 h ; ou
dans laquelle une température de recuit du Cr/Sn et du Sn/Cr va de 140 °C à 200 °C, et dans laquelle une durée de chauffage du Cr/Sn et du Sn/Cr va de 0,5 h à 5 h.

12. La méthode selon l'une quelconque des revendications 1 à 11, comprenant en outre, à l'étape (4), suite audit empilement d'au moins deux guides d'onde optiques plats dans la première direction :
la disposition d'une première tranche de liaison sur les guides d'onde optiques plats empilés, et d'une deuxième tranche de liaison sur un côté des guides d'onde optiques plats empilés tourné à l'opposé de la première tranche de liaison.

13. La méthode selon la revendication 12, dans laquelle la première tranche de liaison comprend :
la couche de substrat transparent ;
les couches réfléchissantes formées sur deux côtés opposés de la couche de substrat transparent ;
les couches de protection formées sur les couches réfléchissantes, respectivement ; et
la deuxième couche métallique de liaison formée sur une surface inférieure de la couche de protection et venant en butée contre la première couche métallique de liaison du guide d'onde optique plat.

14. La méthode selon la revendication 12 ou 13, dans laquelle la deuxième tranche de liaison comprend :
la couche de substrat transparent ;
les couches réfléchissantes formées sur deux côtés opposés de la couche de substrat transparent ;
les couches de protection formées sur les couches réfléchissantes, respectivement ; et
la première couche métallique de liaison formée sur la couche de protection et venant en butée contre la deuxième couche métallique de liaison du guide d'onde optique plat.

15. Une lentille plate à indice de réfraction négatif équivalent, dans laquelle la lentille plate à indice de réfraction négatif équivalent est préparée par la méthode selon l'une quelconque des revendications 1 à 14.
